(19) Europäisches Patentamt / European Patent Office / Office européen des brevets

(11) **EP 4 465 213 B1**

(12) **EUROPEAN PATENT SPECIFICATION**

(45) Date of publication and mention
of the grant of the patent:
**22.04.2026 Bulletin 2026/17**

(21) Application number: **22923614.6**

(22) Date of filing: **26.12.2022**

(51) International Patent Classification (IPC):
**G06N 3/045** (2023.01)     **G06N 3/08** (2023.01)
**G06N 3/0464** (2023.01)

(52) Cooperative Patent Classification (CPC):
**G06N 3/045; G06N 3/0464; G06N 3/08**

(86) International application number:
**PCT/CN2022/141926**

(87) International publication number:
**WO 2023/142828 (03.08.2023 Gazette 2023/31)**

(54) **INFORMATION PROCESSING METHOD AND APPARATUS**

INFORMATIONSVERARBEITUNGSVERFAHREN UND -VORRICHTUNG

PROCÉDÉ ET APPAREIL DE TRAITEMENT D'INFORMATIONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.01.2022 CN 202210112944**

(43) Date of publication of application:
**20.11.2024 Bulletin 2024/47**

(73) Proprietor: **Huawei Technologies Co., Ltd.**
**Shenzhen, Guangdong 518129 (CN)**

(72) Inventors:
• **XIE, Junwen**
**Shenzhen, Guangdong 518129 (CN)**
• **MA, Mengyao**
**Shenzhen, Guangdong 518129 (CN)**
• **LI, Jiahui**
**Shenzhen, Guangdong 518129 (CN)**
• **MA, Jianglei**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**WO-A1-2021/189225     CN-A- 110 135 465**
**CN-A- 113 139 663     CN-A- 113 222 179**
**CN-A- 113 258 935     CN-A- 114 611 705**
**US-A1- 2020 364 603**

• **ROBERT H\"ONIG ET AL: "DAdaQuant: Doubly-adaptive quantization for communication-efficient Federated Learning", ARXIV.ORG, CORNELL UNIVERSITY LIBRARY, 201 OLIN LIBRARY CORNELL UNIVERSITY ITHACA, NY 14853, 31 October 2021 (2021-10-31), XP091084225**
• **ALISTARH DAN ET AL: "QSGD: Communication-Efficient SGD via Gradient Quantization and Encoding", 1 December 2017 (2017-12-01), pages 1 - 12, XP093252360, Retrieved from the Internet <URL:https://proceedings.neurips.cc/paper_files/paper/2017/file/6c340f25839e6acdc73414517203f5f0-Paper.pdf>**
• **MARKUS NAGEL ET AL: "A White Paper on Neural Network Quantization", ARXIV.ORG, CORNELL UNIVERSITY LIBRARY, 201 OLIN LIBRARY CORNELL UNIVERSITY ITHACA, NY 14853, 15 June 2021 (2021-06-15), XP081990169**
• **CHEN SHENGBO ET AL: "Dynamic Aggregation for Heterogeneous Quantization in Federated Learning", IEEE TRANSACTIONS ON WIRELESS COMMUNICATIONS, IEEE SERVICE CENTER, PISCATAWAY, NJ, US, vol. 20, no. 10, 6 May 2021 (2021-05-06), pages 6804 - 6819, XP011882324, ISSN: 1536-1276, [retrieved on 20211007], DOI: 10.1109/TWC.2021.3076613**

- LIAN ZIRUI ET AL: "AGQFL: Communication-efficient Federated Learning via Automatic Gradient Quantization in Edge Heterogeneous Systems", 2021 IEEE 39TH INTERNATIONAL CONFERENCE ON COMPUTER DESIGN (ICCD), IEEE, 24 October 2021 (2021-10-24), pages 551 - 558, XP034056036, DOI: 10.1109/ICCD53106.2021.00089

- YUE KAI ET AL: "Communication-Efficient Federated Learning via Predictive Coding", IEEE JOURNAL OF SELECTED TOPICS IN SIGNAL PROCESSING, IEEE, US, vol. 16, no. 3, 13 January 2022 (2022-01-13), pages 369 - 380, XP011908564, ISSN: 1932-4553, [retrieved on 20220113], DOI: 10.1109/JSTSP.2022.3142678

## Description

### TECHNICAL FIELD

This disclosure relates to the field of distributed learning, and more specifically, to an information processing method.

### BACKGROUND

Federated learning (Federated Learning, FL) is a fundamental artificial intelligence (Artificial Intelligence, AI) technology. The federated learning implements efficient machine learning between a plurality of participants or computing nodes while ensuring information security during big data exchange, protecting terminal data and personal data privacy, and ensuring legal and regulatory compliance. Machine learning algorithms that can be used by the federated learning are not limited to a neural network, but also include other algorithms such as random forest.

Distributed learning such as the federated learning relates to data exchange, for example, model parameter exchange, between the plurality of participants. To ensure communication efficiency, the exchanged data needs to be compressed before being sent.

Currently, in a compression process, deep learning-based compression solutions are applied, for example, model pruning, knowledge distillation, and format conversion. These solutions can effectively use a transmission resource and ensure communication efficiency. However, in these solutions, a transmission data amount is reduced by setting some small parameter values to zero or migrating a larger model to a smaller model. This causes a loss of model performance.

Robert Hönig et. al.: "DAdaQuant:Doubly-adaptive quantization for communication-efficient Federated Learning", ArXiv.org, 31 October 2021 proposes a family of compression schemes with convergence guarantees and good practical performance.

### SUMMARY

Embodiments of this disclosure provide a data processing solution, which may be applied to distributed learning such as federated learning, to ensure communication efficiency while maintaining model performance. The scope of protection of the present invention is set out by the appended claims.

According to a first aspect of this disclosure, a data processing method is provided. The method includes: A first device divides parameters of a distributed training model into a plurality of groups, where numerical intervals of at least two of the plurality of groups are different. The first device determines, based on a quantization bit quantity corresponding to each of the plurality of groups, a plurality of quantization groups corresponding to the plurality of groups, where the quantization bit quantity is determined based on at least one of the following: a transmission resource quantity between the first device and a second device, a loss function value, or a value range of a parameter of each group. The first device sends the plurality of quantization groups to the second device.

In this way, the first device can quantize the parameters of the distributed training model, to implement parameter compression. In this process, factors such as a transmission resource and a value of a parameter are considered, to ensure both communication efficiency and parameter performance during parameter compression. A performance loss caused by over-compression is avoided, and a long delay caused by a low compression rate is also avoided.

In some embodiments of the first aspect, the method further includes: The first device determines, based on a plurality of first parameters in a first group of the plurality of groups, a quantization boundary value corresponding to the first group.

In this manner, the value range of the parameters in the groups obtained through division can be specified by using the quantization boundary value, so that a transmission data amount can be reduced in a quantization process.

In some embodiments of the first aspect, the quantization boundary value includes at least one of the following: a maximum value or a minimum value. The maximum value is a maximum value of the plurality of first parameters, or the maximum value is a maximum value of a plurality of absolute values of the plurality of first parameters, and the minimum value is a minimum value of the plurality of first parameters, or the minimum value is a minimum value of the plurality of absolute values of the plurality of first parameters.

In this manner, the maximum value and/or the minimum value are/is used as the quantization boundary value, so that a numerical interval or an absolute value range of the parameters in the group obtained through division can be specified.

In some embodiments of the first aspect, a quantization group corresponding to the first group includes the quantization boundary value and a plurality of quantization parameters corresponding to the plurality of first parameters.

In some embodiments of the first aspect, the method further includes: The first device receives first indication information from the second device, where the first indication information indicates whether to determine the quantization boundary value based on the absolute values. That the first device determines a quantization boundary value corresponding to the first group includes: The first device determines the quantization boundary value based on the first indication information.

In this manner, the first device may determine the quantization boundary value based on the indication of the second device. In this way, a calculation amount used by the first device to determine a quantization manner can be reduced.

In some embodiments of the first aspect, the method further includes: The first device sends second indication information to the second device, where the second indication information indicates whether the quantization boundary value is determined based on the absolute values.

In this manner, the first device can notify the second device of the quantization manner by using the indication information, so that the second device can correctly perform dequantization.

In some embodiments of the first aspect, each group has an equal quantization bit quantity. In this manner, each group uses a same quantization bit quantity. This can simplify an operation and improve processing efficiency.

In some embodiments of the first aspect, the plurality of groups include the first group and a second group, and a quantization bit quantity corresponding to the first group is not equal to a quantization bit quantity corresponding to the second group. In this manner, different groups use different quantization bit quantities, so that parameter differences between different groups can be fully considered, and impact of quantization on performance can be avoided.

In some embodiments of the first aspect, the method further includes: The first device determines a plurality of quantization bit quantities corresponding to the plurality of groups.

In some embodiments of the first aspect, that the first device determines a plurality of quantization bit quantities corresponding to the plurality of groups includes: The first device determines, based on a quantization bit quantity configuration from the second device, the plurality of quantization bit quantities corresponding to the plurality of groups, where the quantization bit quantity configuration includes a quantization threshold and the corresponding quantization bit quantities.

In this manner, the first device may determine the quantization bit quantity based on the quantization bit quantity configuration from the second device. In this way, actual requirements of both the first device and the second device can be met, and both communication efficiency and compression performance can be considered by the determined quantization bit quantity.

In some embodiments of the first aspect, the method further includes: The first device receives the quantization bit quantity configuration from the second device.

In some embodiments of the first aspect, the method further includes: The first device sends third indication information to the second device, where the third indication information indicates the plurality of quantization bit quantities.

For example, the third indication information can implicitly or indirectly indicate the plurality of quantization bit quantities by using an index in the quantization bit quantity configuration. In this manner, the first device may send the determined quantization bit quantity to the second device, so that the second device can determine the quantization bit quantity of each group based on the index, and ensure that the second device correctly dequantizes the parameter.

In some embodiments of the first aspect, the quantization bit quantity is determined by the second device, and the method further includes: The first device receives fourth indication information from the second device, where the fourth indication information indicates the quantization bit quantity corresponding to each of the plurality of groups.

In this manner, the second device indicates the quantization bit quantity, so that the first device can directly perform parameter quantization based on the indication. This simplifies an operation of the first device, and improves the processing efficiency.

In some embodiments of the first aspect, that a first device divides parameters of a distributed training model into a plurality of groups includes: The first device divides the parameters of the distributed training model into the plurality of groups in a model parameter division manner.

In some embodiments of the first aspect, the method further includes: The first device determines the model parameter division manner based on magnitudes of values of the parameters of the distributed training model. The first device sends fifth indication information to the second device, where the fifth indication information indicates the model parameter division manner.

In this manner, the first device may determine the parameter division manner based on a parameter feature, so that different quantization processing may be subsequently performed for different groups. This can ensure the compression performance.

In some embodiments of the first aspect, the method further includes: The first device receives sixth indication information from the second device, where the sixth indication information indicates the model parameter division manner.

In this manner, the second device can indicate the parameter division manner, so that the first device can directly perform parameter division based on the indication. This simplifies an operation of the first device, and improves the processing efficiency.

In some embodiments of the first aspect, the model parameter division manner indicates that the division is performed based on at least one of the following: a type of a parameter, a type of a network layer at which the parameter is located, and the like.

In this manner, parameter division may be implemented by considering different features of the parameters, so that similar quantization can be performed on parameters in a same group.

In some embodiments of the first aspect, the method further includes: The first device performs entropy encoding on the plurality of quantization groups. That the first device sends the plurality of quantization groups to the second device includes: The first device sends a plurality of entropy-encoded quantization groups to the second device.

In this manner, the first device may further improve a compression rate through entropy encoding, so that the communication efficiency can be further improved.

In some embodiments of the first aspect, the method further includes: The first device sends first entropy encoding indication information to the second device, where the first entropy encoding indication information indicates that the plurality of quantization groups are already entropy-encoded.

In this manner, the second device may learn whether entropy encoding is performed, to correctly decode the received parameter.

In some embodiments of the first aspect, the method further includes: The first device receives second entropy encoding indication information from the second device. The performing, by the first device, entropy encoding on the plurality of quantization groups includes: The first device performs entropy encoding on the plurality of quantization groups based on the second entropy encoding indication information.

In this manner, the first device may perform entropy encoding based on the indication of the second device, so that the compression rate can be further improved.

According to a second aspect of this disclosure, a data processing method is provided. The method includes: A second device receives a plurality of quantization groups from a first device. The second device determines, based on a quantization bit quantity corresponding to each of the plurality of quantization groups, a plurality of groups corresponding to the plurality of quantization groups, where the quantization bit quantity is determined based on at least one of the following: a transmission resource quantity between the first device and the second device, a loss function value, or a value range of a parameter of each group. The second device determines parameters of a distributed training model based on a model parameter division manner and the plurality of groups.

In some embodiments of the second aspect, a first quantization group of the plurality of quantization groups includes a quantization boundary value and a plurality of quantization parameters.

In some embodiments of the second aspect, the quantization boundary value includes at least one of the following: a maximum value or a minimum value. The maximum value is a maximum value of a plurality of first parameters in a first group corresponding to the first quantization group, or the maximum value is a maximum value of a plurality of absolute values of the plurality of first parameters, and the minimum value is a minimum value of the plurality of first parameters, or the minimum value is a minimum value of the plurality of absolute values of the plurality of first parameters.

In some embodiments of the second aspect, the method further includes: The second device sends first indication information to the first device, where the first indication information indicates whether to determine the quantization boundary value based on the absolute values. Alternatively, the second device receives second indication information from the first device, where the second indication information indicates whether the quantization boundary value is determined based on the absolute values.

In some embodiments of the second aspect, each quantization group has an equal quantization bit quantity.

In some embodiments of the second aspect, the plurality of quantization groups include the first quantization group and a second quantization group, and a quantization bit quantity corresponding to the first quantization group is not equal to a quantization bit quantity corresponding to the second quantization group.

In some embodiments of the second aspect, the method further includes: The second device receives third indication information from the first device, where the third indication information indicates a plurality of quantization bit quantities.

In some embodiments of the second aspect, the method further includes: The second device sends a quantization bit quantity configuration to the first device, where the quantization bit quantity configuration includes a quantization threshold and the corresponding quantization bit quantities.

In some embodiments of the second aspect, the method further includes: The second device sends fourth indication information to the first device, where the fourth indication information indicates the quantization bit quantity corresponding to each of the plurality of groups.

In some embodiments of the second aspect, the method further includes: The second device receives fifth indication information from the first device, where the fifth indication information indicates the model parameter division manner.

In some embodiments of the second aspect, the method further includes: The second device sends sixth indication information to the first device, where the sixth indication information indicates the model parameter division manner.

In some embodiments of the second aspect, the model parameter division manner indicates that division is performed based on at least one of the following: a type of a parameter, a type of a network layer at which the parameter is located, and the like.

In some embodiments of the second aspect, the receiving, by a second device, a plurality of quantization groups from a first device includes: The second device receives a plurality of entropy-encoded quantization groups.

In some embodiments of the second aspect, the method further includes: The second device receives first entropy encoding indication information from the first device, where the first entropy encoding indication information indicates that the plurality of quantization groups are already entropy-encoded.

In some embodiments of the second aspect, the method further includes: The second device sends second entropy encoding indication information to the first device, to indicate the first device to perform entropy encoding on the plurality of quantization groups.

According to a third aspect of this disclosure, a communication apparatus is provided. The communication apparatus includes: a division module, configured to divide parameters of a distributed training model into a plurality of groups, where numerical intervals of at least two of the plurality of groups are different; a determining module, configured to determine, based on a quantization bit quantity corresponding to each of the plurality of groups, a plurality of quantization groups corresponding to the plurality of groups, where the quantization bit quantity is determined based on at least one of the following: a transmission resource quantity between the communication apparatus and a second device, a loss function value, or a value range of a parameter of each group; and a sending module, configured to send the plurality of quantization groups to the second device.

In some embodiments of the third aspect, the determining module is configured to determine, based on a plurality of first parameters in a first group of the plurality of groups, a quantization boundary value corresponding to the first group.

In some embodiments of the third aspect, the quantization boundary value includes at least one of the following: a maximum value or a minimum value. The maximum value is a maximum value of the plurality of first parameters, or the maximum value is a maximum value of a plurality of absolute values of the plurality of first parameters, and the minimum value is a minimum value of the plurality of first parameters, or the minimum value is a minimum value of the plurality of absolute values of the plurality of first parameters.

In some embodiments of the third aspect, a quantization group corresponding to the first group includes the quantization boundary value and a plurality of quantization parameters corresponding to the plurality of first parameters.

In some embodiments of the third aspect, the apparatus further includes a receiving module, configured to receive first indication information from the second device, where the first indication information indicates whether to determine the quantization boundary value based on the absolute values. In addition, the determining module is configured to determine the quantization boundary value based on the first indication information.

In some embodiments of the third aspect, the sending module is configured to send second indication information to the second device, where the second indication information indicates whether the quantization boundary value is determined based on the absolute values.

In some embodiments of the third aspect, each group has an equal quantization bit quantity.

In some embodiments of the third aspect, the plurality of groups include the first group and a second group, and a quantization bit quantity corresponding to the first group is not equal to a quantization bit quantity corresponding to the second group.

In some embodiments of the third aspect, the determining module is configured to determine a plurality of quantization bit quantities corresponding to the plurality of groups.

In some embodiments of the third aspect, the determining module is configured to determine, based on a quantization bit quantity configuration from the second device, the plurality of quantization bit quantities corresponding to the plurality of groups, where the quantization bit quantity configuration includes a quantization threshold and the corresponding quantization bit quantities.

In some embodiments of the third aspect, the receiving module is configured to receive the quantization bit quantity configuration from the second device.

In some embodiments of the third aspect, the sending module is configured to send third indication information to the second device, where the third indication information indicates the plurality of quantization bit quantities.

In some embodiments of the third aspect, the quantization bit quantity is determined by the second device, and the receiving module is configured to receive fourth indication information from the second device, where the fourth indication information indicates the quantization bit quantity corresponding to each of the plurality of groups.

In some embodiments of the third aspect, the division module is configured to divide the parameters of the distributed training model into the plurality of groups in a model parameter division manner.

In some embodiments of the third aspect, the determining module is configured to determine the model parameter division manner based on magnitudes of values of the parameters of the distributed training model. The sending module is configured to send fifth indication information to the second device, where the fifth indication information indicates the model parameter division manner.

In some embodiments of the third aspect, the receiving module is configured to receive sixth indication information from the second device, where the sixth indication information indicates the model parameter division manner.

In some embodiments of the third aspect, the model parameter division manner indicates that the division is performed based on at least one of the following: a type of a parameter, a type of a network layer at which the parameter is located, and the like.

In some embodiments of the third aspect, the apparatus further includes an entropy encoding module, configured to perform entropy encoding on the plurality of quantization groups. The sending module is configured to send a plurality of entropy-encoded quantization groups to the second device.

In some embodiments of the third aspect, the sending module is configured to send first entropy encoding indication information to the second device, where the first entropy encoding indication information indicates that the plurality of quantization groups are already entropy-encoded.

In some embodiments of the third aspect, the receiving module is configured to receive second entropy encoding indication information from the second device, and the entropy encoding module is configured to perform entropy encoding on the plurality of quantization groups based on the second entropy encoding indication information.

According to a fourth aspect of this disclosure, a communication apparatus is provided. The communication apparatus includes: a receiving module, configured to receive a plurality of quantization groups from a first device; a first determining module, configured to determine, based on a quantization bit quantity corresponding to each of the plurality of quantization groups, a plurality of groups corresponding to the plurality of quantization groups, where the quantization bit quantity is determined based on at least one of the following: a transmission resource quantity between the first device and the communication apparatus, a loss function value, or a value range of a parameter of each group; and a second determining module, configured to determine parameters of a distributed training model based on a model parameter division manner and the plurality of groups.

In some embodiments of the fourth aspect, a first quantization group of the plurality of quantization groups includes a quantization boundary value and a plurality of quantization parameters.

In some embodiments of the fourth aspect, the quantization boundary value includes at least one of the following: a maximum value or a minimum value. The maximum value is a maximum value of a plurality of first parameters in a first group corresponding to the first quantization group, or the maximum value is a maximum value of a plurality of absolute values of the plurality of first parameters, and the minimum value is a minimum value of the plurality of first parameters, or the minimum value is a minimum value of the plurality of absolute values of the plurality of first parameters.

In some embodiments of the fourth aspect, the apparatus further includes a sending module, configured to send first indication information to the first device, where the first indication information indicates whether to determine the quantization boundary value based on the absolute values.

In some embodiments of the fourth aspect, the receiving module is configured to receive second indication information from the first device, where the second indication information indicates whether the quantization boundary value is determined based on the absolute values.

In some embodiments of the fourth aspect, each quantization group has an equal quantization bit quantity.

In some embodiments of the fourth aspect, the plurality of quantization groups include the first quantization group and a second quantization group, and a quantization bit quantity corresponding to the first quantization group is not equal to a quantization bit quantity corresponding to the second quantization group.

In some embodiments of the fourth aspect, the receiving module is configured to receive third indication information from the first device, where the third indication information indicates a plurality of quantization bit quantities.

In some embodiments of the fourth aspect, the sending module is configured to send a quantization bit quantity configuration to the first device, where the quantization bit quantity configuration includes a quantization threshold and the corresponding quantization bit quantities.

In some embodiments of the fourth aspect, the sending module is configured to send fourth indication information to the first device, where the fourth indication information indicates the quantization bit quantity corresponding to each of the plurality of groups.

In some embodiments of the fourth aspect, the receiving module is configured to receive fifth indication information from the first device, where the fifth indication information indicates the model parameter division manner.

In some embodiments of the fourth aspect, the sending module is configured to send sixth indication information to the first device, where the sixth indication information indicates the model parameter division manner.

In some embodiments of the fourth aspect, the model parameter division manner indicates that division is performed based on at least one of the following: a type of a parameter, a type of a network layer at which the parameter is located, and the like.

In some embodiments of the fourth aspect, the receiving module is configured to receive a plurality of entropy-encoded quantization groups.

In some embodiments of the fourth aspect, the receiving module is configured to receive first entropy encoding indication information from the first device, where the first entropy encoding indication information indicates that the plurality of quantization groups are already entropy-encoded.

In some embodiments of the fourth aspect, the sending module is configured to send second entropy encoding indication information to the first device, to indicate the first device to perform entropy encoding on the plurality of quantization groups.

According to a fifth aspect of this disclosure, a communication device is provided. The communication device includes a processor and a memory. The memory stores instructions executed by the processor. When the instructions are executed by the processor, the communication device is enabled to implement an operation of the method according to any one of the first aspect or the embodiments of the first aspect, or implement an operation of the method according to any one of the second aspect or the embodiments of the second aspect.

In some embodiments of the fifth aspect, the communication device further includes a transceiver, configured to receive information from another device, send information to the another device, or the like.

According to a sixth aspect of this disclosure, a computer-readable storage medium is provided. The computer-readable storage medium stores computer-executable instructions. When the computer-executable instructions are executed by a processor, an operation of the method according to any one of the first aspect or the embodiments of the first aspect is implemented, or an operation of the method according to any one of the second aspect or the embodiments of the second aspect is implemented.

According to a seventh aspect of this disclosure, a chip or a chip system is provided. The chip or the chip system includes a processing circuit, configured to perform an operation of the method according to any one of the first aspect or the embodiments of the first aspect, or perform an operation of the method according to any one of the second aspect or the embodiments of the second aspect.

According to an eighth aspect of this disclosure, a computer program or a computer program product is provided. The computer program or the computer program product is tangibly stored in a computer-readable medium and includes computer-executable instructions. When the computer-executable instructions are executed, an operation of the method according to any one of the first aspect or the embodiments of the first aspect is implemented, or an operation of the method according to any one of the second aspect or the embodiments of the second aspect is implemented.

It should be understood that the content described in the summary is not intended to limit key or important features of embodiments of this disclosure or limit the scope of this disclosure. Other features of this disclosure will be readily understood through the following descriptions.

## BRIEF DESCRIPTION OF DRAWINGS

The foregoing and other features, advantages, and aspects of embodiments of this disclosure become more evident in conjunction with the accompanying drawings and with reference to the following detailed descriptions. In the accompanying drawings, the same or similar reference numerals indicate the same or similar elements, where:

FIG. 1 is a schematic of an example scenario in which an embodiment of this disclosure is applicable;
FIG. 2 is a signaling interaction schematic of an information processing process according to some embodiments of this disclosure;
FIG. 3 is a schematic of parameter division according to some embodiments of this disclosure;
FIG. 4 is a schematic of parameter division according to some embodiments of this disclosure;
FIG. 5 is a schematic of parameter division according to some embodiments of this disclosure;
FIG. 6 is a signaling interaction schematic of an information transmission process according to some embodiments of this disclosure;
FIG. 7 is a schematic of a compression configuration message according to some embodiments of this disclosure;
FIG. 8 is a schematic of compressed data according to some embodiments of this disclosure;
FIG. 9 is a signaling interaction schematic of an information transmission process according to some embodiments of this disclosure;
FIG. 10 is a schematic of a quantization indication message according to some embodiments of this disclosure;
FIG. 11 is a schematic of compressed data according to some embodiments of this disclosure;
FIG. 12 is a block schematic of a communication apparatus according to some embodiments of this disclosure;
FIG. 13 is a block schematic of a communication apparatus according to some embodiments of this disclosure; and
FIG. 14 is a block schematic of an example device that may be used to implement an embodiment of this disclosure.

## DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. The term "a plurality of" indicates two or more. Other explicit and implicit definitions may also be included below.

Embodiments of this disclosure may be implemented according to a proper communication protocol, including but not limited to a cellular communication protocol like 3rd generation (3rd Generation, 3G), 4th generation (4G), 5th generation (5G), and 6th generation (6G), a wireless local area network communication protocol like institute of electrical and electronics engineers ((Institute of Electrical and Electronics Engineers, IEEE) 802.11), a future evolved mobile communication system protocol like a 6G communication system protocol, and/or another protocol known or developed in the future.

The technical solutions in embodiments of this disclosure are applied to a communication system that complies with any proper communication protocol, for example, a universal mobile telecommunications system (Universal Mobile Telecommunications Service, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronization code division multiple access (Time Division-Synchronization Code Division Multiple Access, TD-SCDMA) system, a frequency division duplex (Frequency Division Duplex, FDD) system, a time division duplex (Time Division Duplex, TDD) system, a fifth generation (5G) system or new radio (New Radio, NR), and a future evolved 6G or 7G communication system.

It should be understood that embodiments of this disclosure may be applied to any communication system that has a similar problem, for example, a wireless local area network (WLAN), a wired communication system, or another communication system developed in the future.

The term "terminal device" used in this disclosure refers to any terminal device that can perform wired or wireless communication with a network device or between terminal devices. The terminal device may be sometimes referred to as user equipment (User Equipment, UE). The terminal device may be any type of mobile terminal, fixed terminal, or portable terminal. In an example, the terminal device may include a mobile phone, a station, a unit, a device, a mobile terminal (Mobile Terminal, MT), a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a positioning device, a radio broadcast receiver, an e-book device, a game device, an internet of things (Internet of Things, IoT) device, a vehicle-mounted device, a flight vehicle, a virtual reality (Virtual Reality, VR) device, an augmented reality (Augmented Reality, AR) device, a wearable device, a terminal device in a 5G network, any terminal device in an evolved public land mobile network (Public Land Mobile Network, PLMN), another device that can be used for communication, or any combination thereof. This is not limited in embodiments of this disclosure.

The term "network device" used in this disclosure is an entity or a node that may be configured to communicate with a terminal device, for example, may be an access network device. The access network device may be an apparatus that is deployed in a wireless access network and that provides a wireless communication function for the mobile terminal. For example, the access network device may be a radio access network (Radio Access Network, RAN) network device. The access network device may include various types of base stations. For example, the access network device may include various forms of macro base stations, micro base stations, pico base stations, pico base stations, relay stations, access points, satellites, remote radio units (Remote Radio Units, RRUs), radio frequency heads (Radio Frequency Heads, RHs), remote radio heads (Remote Radio Heads, RRHs), and the like, or may be a device that undertakes a base station function in device-to-device (D2D) communication and machine-to-machine (M2M) communication. In systems using different wireless access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in the 5G network. In some scenarios, the access network device may include a central unit (Central Unit, CU) and/or a distributed unit (Distributed Unit, DU). The CU and DU may be deployed in different places. For example, the DU is remotely deployed in a high-traffic area, and the CU is deployed in a central equipment room. Alternatively, the CU and the DU may be deployed in a same equipment room. The CU and the DU may alternatively be different components in a same rack. For ease of description, in subsequent embodiments of this disclosure, the foregoing apparatuses that provide a wireless communication function for the mobile terminal are collectively referred to as a network device. This is not specifically limited in embodiments of this disclosure.

With the development of the artificial intelligence field, people's life style has changed dramatically. From AlphaGo's victory in a Go game against a top human player to self driving and AI medical scenarios that are based on target detection and image segmentation, and to the natural language field driven by machine translation, text processing, and intelligent chat, AI is gradually integrated into every aspect of the human society.

Rise of the AI cannot be achieved without massive high-quality data. However, data silos are formed between different entities or enterprises due to security and privacy protection issues and interest-induced barriers of interaction. Based on this, federated learning emerges. The federated learning was proposed in 2016, and is essentially a distributed learning framework that aims to achieve a global model built by all ports while ensuring data privacy and security. The federated learning allows, while ensuring that data is stored locally and not shared, users to form a union, and to obtain a global model through joint training, to avoid data privacy and security issues.

In a federated learning-based module training process, frequent interaction occurs, and interaction at each time relates to a large amount of data. In consideration of communication efficiency, the interaction of the federated learning should not be excessively frequent, and exchanged data needs to be compressed before transmission. Many compression methods are successively proposed. For example, a multi-step update and periodic averaging method can be used to reduce a quantity of times of interaction. For example, manners such as parameter pruning and knowledge distillation can be applied to reduce a data amount of a parameter to improve transmission efficiency. However, currently a model compression algorithm usually loses some performance. Therefore, a solution to improving the communication efficiency while ensuring data performance is needed.

For the foregoing problem and other potential problems, embodiments of this disclosure provide a parameter compression solution, so that parameters can be divided into a plurality of groups, and each group is quantized to compress the parameters. In this way, the data performance can be ensured, and the communication efficiency can be improved.

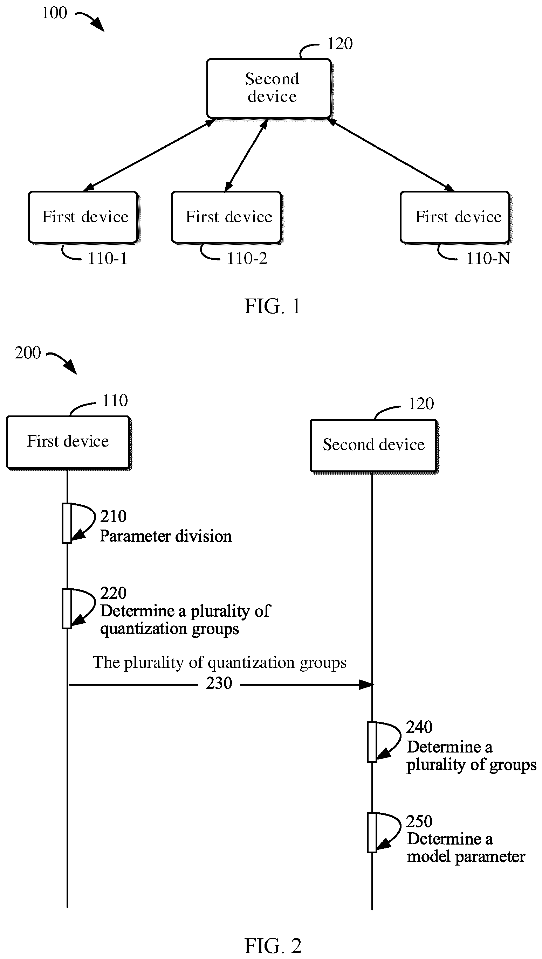

FIG. 1 is a schematic of an example scenario 100 in which an embodiment of this disclosure is applicable. In the scenario 100, a first device 110-1 to a first device 110-N and a second device 120 are included. For brevity, the first device 110-1 to the first device 110-N may be collectively referred to as a first device 110.

In some examples, the first device 110 may be implemented as a client device, and the second device 120 may be implemented as a server device. In some examples, the first device 110 may be implemented as a terminal device, and the second device 120 may be implemented as an access network device. In some examples, the first device 110 may be referred to as an execution node in distributed machine learning, and the second device 120 may be referred to as an execution anchor in distributed machine learning. This is not limited in this disclosure.

In a distributed learning process, model training of a neural network is used as an example. The second device 120 sends an initial model parameter of the neural network to N1 first devices 110, for example, may send the initial model parameter of the neural network in a broadcast or multicast manner. The N1 first devices 110 perform learning, for example, training or iteration, based on a local dataset and the initial model parameters, to obtain processed parameters that may include, for example, a local model parameter or a gradient parameter. Each of the N1 first devices 110 compresses the obtained processed parameter and sends the compressed parameter to the second device 120. The second device 120 decompresses the processed parameter from each of the N1 first devices 110, and obtains an updated model parameter by aggregation. In this way, a model parameter of the neural network at the second device 120 is changed from the initial model parameter to the updated model parameter.

Further, based on a similar process, a next round of training or learning may be performed, to obtain a further updated model parameter. In other words, the second device 120 may send the updated model parameter to N2 first devices 110, and the N2 first devices 110 obtain reprocessed parameters and send the parameters back to the second device 120. This is repeated until parameter convergence occurs, or until the training fails, for example, a maximum quantity of times of iteration is reached. For brevity of description, in the following, a parameter sent by the second device 120 to the first device 110 may be collectively referred to as a to-be-trained parameter, for example, the initial model parameter of the neural network, or the updated aggregated model parameter obtained through a previous round of training.

In a training process, different times of iteration may be performed by a same first device 110 or different first devices 110. For example, the foregoing N1 and N2 may be equal or unequal. For example, the N1 first devices 110 and the N2 first devices 110 may be completely different, or may be partially the same, or may be completely the same. For example, the N1 first devices 110 include the first device 110-1, and the N2 first devices 110 include or do not include the first device 110-1.

It can be learned that a plurality of rounds of data exchange are involved in the distributed learning process. For example, in each round, the second device 120 receives a compressed parameter from one or more first devices 110.

In some embodiments, in the plurality of rounds of interaction, a compression solution used by each first device 110 is fixed. In some other embodiments, in the plurality of rounds of interaction, a compression solution used by each first device 110 may be dynamically adjusted. For example, the compression solution may be updated based on an attribute of a parameter in a middle round of interaction. For brevity of description, in the following embodiments, one time of compression by the first device 110 is used as an example for description. However, it may be understood that a process of each time of compression in the plurality of rounds of interaction is similar.

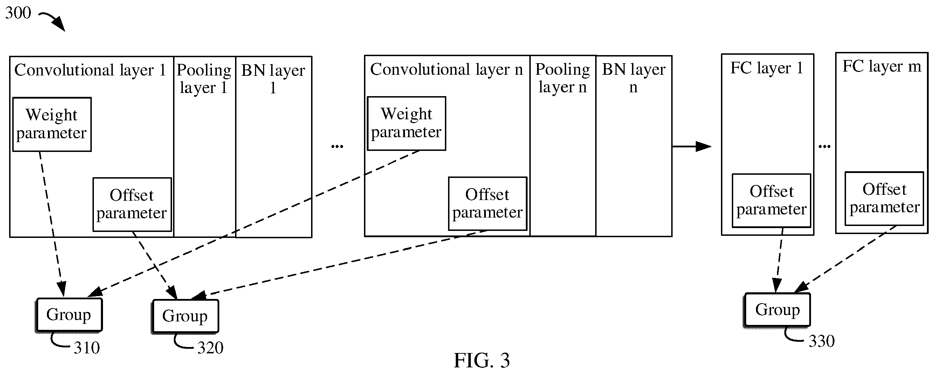

FIG. 2 is a signaling interaction schematic of an information processing process 200 according to some embodiments of this disclosure. The process 200 relates to a first device 110 and a second device 120. The first device 110 in FIG. 3 refers to any one of a first device 110-1 to a first device 110-N in FIG. 1.

The first device 110 divides 210 parameters of a distributed training model into a plurality of groups. Each group includes a plurality of parameters, and quantities of parameters in different groups may be the same or may be different. For example, a first group includes M1 parameters, a second group includes M2 parameters, and M1 and M2 may or may not be equal. Values of the plurality of parameters in different groups may be located in a same interval or different intervals. The first group of the plurality of groups is used as an example. The first group includes the M1 parameters. In this case, a numerical interval of the first group may be determined based on a minimum value of values of the M1 parameters and a maximum value of the values of the M1 parameters, for example, may be assumed as a closed interval [a1, b1]. Similarly, for the second group including the M2 parameters, a numerical interval of the second group may be determined, for example, may be assumed as [a2, b2]. In an example, a1=a2 and b1=b2, that is, the numerical interval of the first group is the same as the numerical interval of the second group. In another example, a1≠a2 and/or b1≠b2, that is, the numerical interval of the first group is different from the numerical interval of the second group. It may be understood that the first group herein may be any one of the plurality of groups, and the second group may be any one of the plurality of groups that is different from the first group. For example, numerical intervals of at least two groups of the plurality of groups are different. It should be noted that the closed interval [a1, b1] in this application may alternatively be an open interval (a1, b1), a left-open and right-closed interval (a1, b1], or a left-closed and right-open interval [a1, b1). This does not affect the essence of this application and does not lose generality. This application uses [a1, b1] as an example, and this is similar for [a2, b2].

Optionally, in some examples, any two of the plurality of groups have the following differences: a numerical interval of a value of a parameter, a type of the parameter, or a type of a network layer to which the parameter belongs. The type of the parameter is, for example, a weight, an offset, a variance, and an average value, and the type of the network layer to which the parameter belongs is, for example, a convolutional layer or a full connection layer.

The parameters of the distributed training model may be obtained by the first device 110 by learning or training by using a local dataset (that is, stored in a memory of the first device 110) and based on model parameters of a previous round from the second device 120.

The first device 110 may divide the parameters of the distributed training model into the plurality of groups based on a parameter division manner.

In some embodiments, the parameter division manner may indicate that the parameter division is performed based on at least one of the following: the type of the parameter, the type of the network layer at which the parameter is located, and the like. The type of the network layer includes, for example, the convolutional layer and the full connection layer. The type of the parameter includes, for example, a weight parameter, an offset parameter, and an average value parameter.

For example, parameters of a same type at network layers of a same type may be grouped into one group. FIG. 3 is a schematic of parameter division 300 according to some embodiments of this disclosure. In FIG. 3, parameters that represent weights at convolutional layers may be grouped into one group, for example, a group 310. Parameters that represent offsets at the convolutional layers are grouped into one group, for example, a group 320. Parameters that represent weights at full connection layers are grouped into one group, for example, a group 330. Parameters that represent offsets at the full connection (Full Connection, FC) layers are grouped into one group, for example, a group 340. In this way, parameters at different neural network layers may belong to a same group. Optionally, the parameter division manner described with reference to FIG. 3 may be referred to as a type-based division manner.

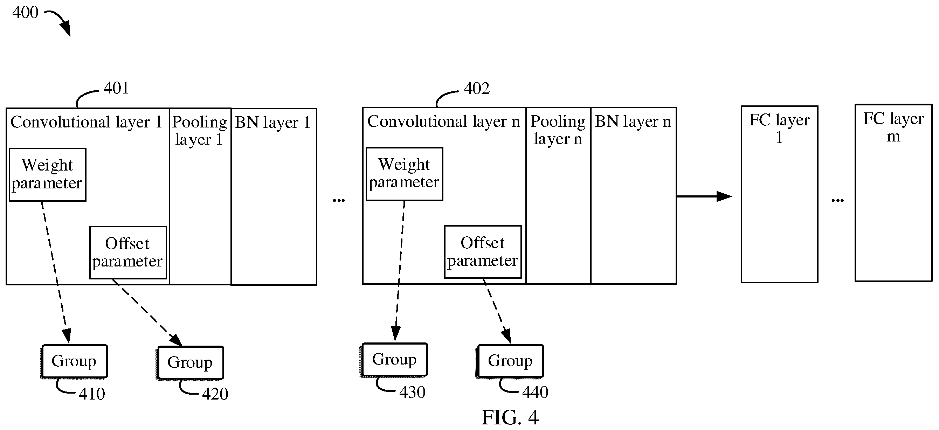

For example, parameters of different types at a same network layer may be grouped into different groups. FIG. 4 is a schematic of parameter division 400 according to some embodiments of this disclosure. In FIG. 4, parameters that represent weights at a convolutional layer 401 may be grouped into one group, for example, a group 410. Parameters that represent offsets at the convolutional layer 401 are grouped into one group, for example, a group 420. Parameters that represent weights at a convolutional layer 402 are grouped into one group, for example, a group 430. Parameters that represent offsets at the convolutional layer 402 are grouped into one group, for example, a group 440. In this way, parameters in a same group definitely belong to a same neural network layer. Optionally, a parameter division manner described with reference to FIG. 4 may be referred to as a matrix-based division manner.

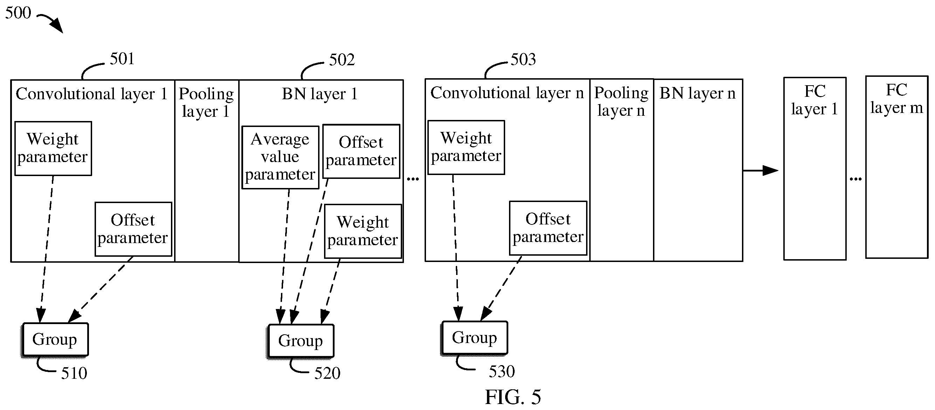

For example, parameters at a same network layer may be grouped into a same group. FIG. 5 is a schematic of parameter division 500 according to some embodiments of this disclosure. In FIG. 5, parameters at a convolutional layer 501 may be grouped into one group, for example, a group 510. Parameters at a batch normalization layer 502 are grouped into a group, for example, a group 520. Parameters at the convolutional layer 503 are grouped into one group, for example, a group 530. In this way, parameters at a same network layer belong to a same group. Optionally, a parameter division manner described with reference to FIG. 5 may be referred to as a network layer-based division manner.

In some embodiments, parameter division manners may alternatively indicate to perform division based on other features of parameters, and are not listed one by one herein.

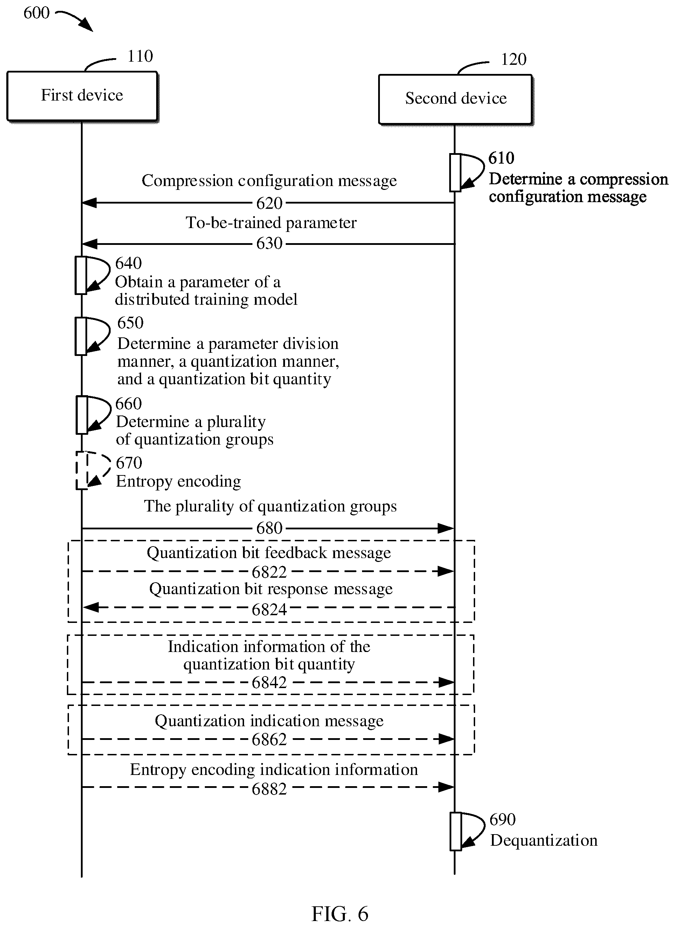

For example, the parameter division manner may be determined by the second device 120 and then indicated to the first device 110, or the parameter division manner may be determined by the first device 110. The following provides detailed descriptions with reference to the embodiments in FIG. 6 to FIG. 11.

The first device 110 determines 220, based on a quantization bit quantity corresponding to each of the plurality of groups, a plurality of quantization groups corresponding to the plurality of groups. For example, the quantization bit quantity may indicate a length of each quantization parameter in the corresponding quantization group, that is, a quantity of occupied bits. Storage space occupied by the plurality of quantization groups is less than storage space occupied by the plurality of groups. For example, the storage space occupied by the plurality of quantization groups may be 50% or another value of the storage space occupied by the plurality of groups. In this way, compression of the plurality of groups is implemented.

Each quantization group may include a plurality of quantization parameters, where a length of each of the plurality of quantization parameters is equal to or less than a corresponding quantization bit quantity. Specifically, a first group of the plurality of groups is used as an example. Assuming that the first group includes M1 parameters, and a quantization bit quantity corresponding to the first group is n1, a first quantization group corresponding to the first group includes M1 quantization parameters, and a quantity of bits of each of the M1 quantization parameters may be equal to n1.

Each quantization group may include a quantization boundary value and the plurality of quantization parameters, where the quantization boundary value may be determined based on a numerical interval of values of a plurality of parameters in a corresponding group, and a length of each of the plurality of quantization parameters is equal to or less than a corresponding quantization bit quantity.

The first device 110 may determine a quantization boundary value determining manner of each of the plurality of groups. In an example, the first device 110 may determine the quantization boundary value determining manner, and the quantization boundary value determining manner is applied to each group. In another example, for each of the plurality of groups, the first device 110 may separately determine a corresponding quantization boundary value determining manner.

In some embodiments, the quantization boundary value determining manner may indicate whether the quantization boundary value is determined based on an absolute value. For example, that the quantization boundary value is determined not based on the absolute value includes: determining a maximum value and a minimum value of the plurality of parameters in the group as quantization boundary values. The first group of the plurality of groups is used as an example. The first group includes the M1 parameters, and a numerical interval of values of the M1 parameters is a closed interval [a1, b1]. Correspondingly, it may be determined that quantization boundary values include a1 and b1. For example, that the quantization boundary value is determined based on the absolute value includes: determining a maximum value and a minimum value of absolute values of the plurality of parameters in the group as quantization boundary values; or determining a maximum value of absolute values of the plurality of parameters in the group as a quantization boundary value. The first group of the plurality of groups is used as an example. The first group includes the M1 parameters, and the numerical interval of the values of the M1 parameters is a closed interval [a1, b1]. If both a1 and b1 are positive values, optionally, it may be determined that quantization boundary values include a1 and b1. If a1 is a negative value and b1 is a positive value, optionally, it may be determined that a quantization boundary value includes max(-a1, b1), where max indicates that a maximum value is obtained. In an example, the quantization boundary value determining manner in which the quantization boundary value is determined not based on the absolute value may be referred to as a conventional quantization manner, and the quantization boundary value determining manner in which the quantization boundary value is determined based on the absolute value is referred to as a symbol quantization manner. However, it should be understood that the names are merely an example, and should not be construed as a limitation on this embodiment of this disclosure.

In some embodiments, quantization boundary value determining manners may alternatively indicate to perform determining based on other value features of parameters, and are not listed herein one by one.

For example, the quantization boundary value determining manner may be determined by the second device 120 and then indicated to the first device 110, or the quantization boundary value determining manner may be determined by the first device 110, or may be determined by the first device 110 based on a configuration of the second device 120. The following provides detailed descriptions with reference to embodiments in FIG. 6 to FIG. 11.

In some examples, for the plurality of groups, each group may have an equal quantization bit quantity. For example, the first device 110 or the second device 120 may determine the quantization bit quantity, and that the quantization bit quantity is used for each group. In this manner, each quantization parameter in each quantization group has an equal length. In some examples, quantization bit quantities of at least two of the plurality of groups are different. For example, the first device 110 or the second device 120 may determine a corresponding quantization bit quantity for each group. In this manner, lengths of quantization parameters located in different quantization groups may or may not be equal. For example, assuming that the first group includes the M1 parameters, and the quantization bit quantity corresponding to the first group is n1, the first quantization group corresponding to the first group includes the M1 quantization parameters, and a quantity of bits of each of the M1 quantization parameters may be equal to n1. Assuming that the second group includes the M2 parameters, and a quantization bit quantity corresponding to the second group is n2, a second quantization group corresponding to the second group includes M2 quantization parameters, and a quantity of bits of each of the M2 quantization parameters may be equal to n2.

Optionally, in some examples, each quantization parameter may include at least one bit indicating that the corresponding parameter has a positive or negative value. For example, it is assumed that a quantization boundary value determining manner of a specific quantization group is the symbol quantization manner (that is, determining a quantization boundary value based on an absolute value). Assuming that a quantity of bits of a quantization parameter in the quantization group is equal to n1, any bit (for example, a first bit) in n1 bits represents that the quantization parameter has a positive or negative value, and the other n1-1 bits represent a parameter size.

In this embodiment of this disclosure, the quantization bit quantity may be determined by the second device 120 and then indicated to the first device 110, or the quantization bit quantity may be determined by the first device 110, or may be determined by the first device 110 based on the configuration of the second device 120. The following provides detailed descriptions with reference to embodiments in FIG. 6 to FIG. 11.

Optionally, as shown in FIG. 2, the first device 110 may perform entropy encoding 222 on the plurality of quantization groups. In some examples, entropy encoding may be performed based on an indication from the second device 120. In some examples, the first device 110 may determine to perform entropy encoding and notify the second device 120. For entropy encoding, refer to the following detailed descriptions in the embodiments with reference to FIG. 6 to FIG. 11.

The first device 110 sends 230 the plurality of quantization groups to the second device 120. Optionally, in an embodiment in which the first device 110 has performed entropy encoding, the sent plurality of quantization groups are a plurality of entropy-encoded quantization groups.

Correspondingly, the second device 120 can receive the plurality of quantization groups from the first device 110. It may be understood that, in some examples, the second device 120 first sends a model parameter of a previous round to a plurality of first devices 110, and correspondingly, the second device 120 may receive a plurality of quantization groups sent by each of the plurality of first devices 110.

The second device 120 determines 240 the plurality of groups corresponding to the plurality of quantization groups. For example, the second device 120 may perform dequantization based on a quantization manner and the quantization bit quantity, to obtain the plurality of groups.

The second device 120 determines 250 a model parameter. For example, the second device 120 may determine, based on a parameter division manner, a location of each parameter in the plurality of dequantized groups in a network model. In this way, the second device 120 can obtain the model parameter obtained through a current round of training.

Further, it may be understood that the second device 120 may obtain, based on model parameters from the plurality of first devices, to-be-trained parameters of a next round by aggregation. A subsequent process is similar to the foregoing process, and is not repeated in this specification.

The following describes more specific implementations of quantization and dequantization in embodiments of this disclosure with reference to FIG. 6 to FIG. 11.

FIG. 6 is a signaling interaction schematic of an information transmission process 600 according to some embodiments of this disclosure. The process 600 relates to a first device 110 and a second device 120. The first device 110 in FIG. 6 may include any one of a first device 110-1 to a first device 110-N in FIG. 1.

The second device 120 determines 610 a compression configuration message. The compression configuration message includes first indication information, where the first indication information indicates a parameter division manner. For example, the second device 120 may determine the parameter division manner.

In some embodiments, the second device 120 may determine the parameter division manner based on at least one of the following factors: a parameter attribute of a to-be-trained parameter, a network structure of a to-be-trained model, communication efficiency, and model performance. The to-be-trained parameter may be an initial model parameter, or may be an updated model parameter obtained based on a previous round of training. The parameter attribute may include: a value range of the parameter, a type of the parameter, a network layer at which the parameter is located, and the like. The type of the parameter includes, for example, a weight, an offset, a variance, and an average value. The network structure may include a type of a network layer, a quantity of network layers, and the like in the model. The type of the network layer includes, for example, a convolutional layer and a full connection layer.

For example, the parameter division manner determined by the second device 120 may be a type-based division manner shown in FIG. 3, a matrix-based division manner shown in FIG. 4, or a network layer-based division manner shown in FIG. 5.

In some examples, the first indication information may be indicated by using one bit. For example, "0" indicates the matrix-based division manner, and "1" indicates the type-based division manner. In some examples, the first indication information may be indicated by using two bits. For example, "00" represents the matrix-based division manner, "01" represents the type-based division manner, and "10" represents the network layer-based division manner. In some other examples, the first indication information may alternatively be indicated by using more bits. This is not limited in this disclosure.

The type-based division manner and the matrix-based division manner are compared, and it may be understood that signaling overheads of the type-based division manner are fewer than signaling overheads of the matrix-based division manner, but model performance of the type-based division manner is inferior to model performance of the matrix-based division manner. In practice, a better compromise may be made between communication efficiency and model performance, to determine a proper parameter division manner.

For example, it is assumed that a quantity of to-be-trained parameters is s, the to-be-trained parameters may be divided into r1 groups in the type-based division manner, and the to-be-trained parameters may be divided into r2 groups in the matrix-based division manner. If $(r2-r1)\times32\times2<s\times d$ is satisfied, it is determined that the parameter division manner is the matrix-based division manner. On the contrary, if $(r2-r1)\times32\times2\geq s\times d$ is satisfied, it is determined that the parameter division manner is the type-based division manner. s, r1, and r2 are all positive integers, 32 represents a quantity of bits occupied by a floating point number in a computer system, and d is a predetermined value, for example, may be a difference between quantities of bits of two different parameter division manners determined by a user based on an empirical value.

For example, assuming that the quantity of to-be-trained parameters is s, the to-be-trained parameters may be divided into r1 groups in the type-based division manner. If s/r1 is less than a preset threshold, it is determined that the parameter division manner is the type-based division manner. On the contrary, if s/r1 is greater than or equal to the preset threshold, it is determined that the parameter division manner is the matrix-based division manner. The preset threshold may be predefined by the user, or the preset threshold may be determined based on a historical division manner, for example, is equal to a maximum value of a quantity of average parameters of groups in a historically trained model.

For ease of description, the following may assume that the parameter division manner is the type-based division manner or the matrix-based division manner. However, it should be understood that this disclosure is not limited thereto. For example, a quantity threshold of parameters in each group after division may be further set. For example, a quantity of a plurality of parameters in each group may be limited to be between a first quantity threshold and a second quantity threshold, and the first quantity threshold is less than the second quantity threshold. For example, if a quantity of a plurality of parameters in a group 1 is greater than the second quantity threshold because a parameter division manner is applied, the group 1 may be further divided into at least two groups. In this way, a performance loss caused by an excessively large quantity of parameters in a group can be avoided. If a quantity of a plurality of parameters in a group 2 is less than the first quantity threshold because a parameter division manner is applied, the group 2 may be combined with another group. In this way, compression efficiency can be further improved, and excessive signaling overheads can be avoided.

Optionally, in some embodiments of this disclosure, the compression configuration message may include second indication information. In other words, the compression configuration message includes the first indication information and the second indication information.

In some embodiments, the second indication information may indicate a quantization boundary value determining manner (or a quantization manner for short). For example, the second device 120 may determine the quantization boundary value determining manner, and the quantization boundary value determining manner is used for each group. In other words, the quantization boundary value determining manner of each group is the same.

For example, the second device 120 may use a quantization manner that is most frequently used by other models in historical training as the quantization boundary value determining manner.

For example, the second device 120 may determine the quantization boundary value determining manner based on a distribution status of values of parameters. For example, if the values of the parameters are not evenly distributed, it may be determined that a conventional quantization manner is applied, that is, values of positive and negative numbers are considered. In this way, an error can be reduced. For example, a plurality of parameters in a specific group are all positive values or all negative values. For example, a difference between a maximum value (positive) and a minimum value (negative) in a group is large. For example, if a parameter is a backward-updated gradient or a residual parameter of a model, positiveness or negativeness of a value of the parameter is more important. In this case, it may be determined that a symbol quantization manner is applied, that is, quantization is performed based on an absolute value, to ensure that each parameter maintains a correct update direction, and avoid an inaccurate gradient direction of a parameter whose value is near 0.

In addition, it may be understood that, for the symbol quantization manner, a minimum value of values of parameters may be 0 or close to 0. In this case, a quantization boundary value may include a maximum value of absolute values but does not include a minimum value of the absolute values. In this way, signaling overheads can be reduced.

In some examples, the second indication information may be indicated by using one bit. For example, "0" indicates the conventional quantization manner, and "1" indicates the symbol quantization manner. In some other examples, the second indication information may alternatively be indicated by using more bits, for example, may be indicated by using two bits, where one bit indicates that a plurality of groups use a same quantization manner, and the other bit indicates a quantization manner used by each group. This is not limited in this disclosure.

In some embodiments, the second indication information may indicate a quantization manner configuration, and the second indication information may be used by the first device 110 to determine the quantization manner.

In some examples, the second indication information may be indicated by using one bit. For example, "0" indicates that a same quantization manner is used for a plurality of groups, and "1" indicates that a quantization manner is respectively determined for each group. In some examples, the second indication information may be indicated by using m1 bits. For example, one bit (for example, a first bit) indicates whether all groups use a same quantization manner, and the other m1-1 bits indicate a threshold used to determine the quantization manner. In some examples, the second indication information may be indicated by using the m1-1 bits, and represents a threshold used to determine the quantization manner. For example, for a specific embodiment of determining the quantization manner based on the quantization manner configuration, refer to the following descriptions with reference to 650.

Optionally, in some embodiments of this disclosure, the compression configuration message further includes third indication information. In this case, the compression configuration message may include the first indication information, the second indication information, and the third indication information.

In some embodiments, the third indication information may indicate a quantization bit quantity. For example, the second device 120 may determine the quantization bit quantity, and the quantization bit quantity is used for each group. In other words, the quantization bit quantity of each group is the same. Optionally, the quantization bit quantity used for all groups may be referred to as a round quantization bit quantity or a coarse-grained quantization bit quantity.

The second device 120 may determine the quantization bit quantity based on a transmission resource between the first device 110 and the second device 120. Optionally, the second device 120 may allocate, to the first device 110, a transmission resource from the first device 110 to the second device 120, and determine the quantization bit quantity based on the allocated transmission resource.

In some examples, the third indication information may be indicated by using m2 bits, and may indicate that a maximum value of the quantization bit quantity is $2^{m2}$. In some other examples, the third indication information may alternatively be indicated by using more or fewer bits. This is not limited in this disclosure.

In some embodiments, the third indication information may indicate a quantization bit quantity configuration, and the third indication information may be used by the first device 110 to determine the quantization bit quantity.

The quantization bit quantity configuration may indicate a quantization granularity, and a quantization threshold and a quantization bit quantity list that are used to determine the quantization bit quantity, where the quantization granularity may indicate whether a plurality of groups use a same quantization bit quantity.

In some examples, the quantization granularity may indicate that the plurality of groups use the same quantization bit quantity, for example, the round quantization bit quantity or the coarse-grained quantization bit quantity. Optionally, the quantization granularity may indicate a coarse granularity. In some examples, the quantization granularity may indicate that the plurality of groups use different quantization bit quantities, for example, fine-grained quantization bit quantities, and optionally, the quantization granularity may indicate a fine granularity. In some examples, the quantization granularity may indicate a combination of the coarse granularity and the fine granularity.

For example, the quantization bit quantity configuration may include a quantization threshold quantity and a quantization threshold list, where the quantization threshold quantity indicates a quantity of quantization thresholds in the quantization threshold list, and the quantization threshold list may include a plurality of quantization thresholds. For example, it is assumed that the quantization threshold quantity is K, K is a positive integer, and the quantization threshold list includes $(T_1, T_2,... , T_K)$.

The quantization bit quantity configuration may further include a list continuity indication and a quantization list, where the list continuity indication indicates a representation form of the quantization list, and the quantization list includes one or more quantization bit quantities. For example, one bit may be used to represent the list continuity indication. For example, if the indication indicates that the list is discontinuous, the quantization list may include $(b_0, b_1, b_2, ... , b_K)$. If the indication indicates that the list is continuous, the quantization list may include $b_0$ and/or $b_K$.

Optionally, in some examples, the quantization granularity may indicate the combination of the coarse granularity and the fine granularity. The quantization bit quantity configuration may include a first quantization threshold quantity, a first quantization threshold list, a first list continuity indication, and a first quantization list that correspond to the coarse granularity, and the quantization bit quantity configuration further includes a second quantization threshold quantity, a second quantization threshold list, a second list continuity indication, and a second quantization list that correspond to the fine granularity. Alternatively, the quantization bit quantity configuration may not include the second list continuity indication and the second quantization list. In an actual scenario, the second list continuity indication and the second quantization list that correspond to the coarse granularity may be determined based on the first list continuity indication and the first quantization list that correspond to the coarse granularity.

For example, for a specific embodiment of determining the quantization bit quantity based on the quantization bit quantity configuration, refer to the following descriptions with reference to 650.

Optionally, in an example, the quantization bit quantity configuration may indicate a preset condition, so that when determining that the preset condition is met, the first device 110 may consider that the quantization bit quantity is 0, or it may be understood that the first device 110 does not send a processed parameter to the second device 120 after completing a current round of iterative training. For example, the second device 120 may determine, based on a parameter of a previous round, a processed parameter of the current round. In this case, the second device 120 may avoid, by using the configuration, a case in which the first device 110 sends the processed parameter of the current round. This can reduce signaling overheads.

Optionally, in some embodiments of this disclosure, the compression configuration message further includes entropy encoding indication information. In this case, the compression configuration message may include the first indication information, the second indication information, and the entropy encoding indication information. Alternatively, in this case, the compression configuration message may include the first indication information, the second indication information, the third indication information, and the entropy encoding indication information.

The entropy encoding indication information may indicate whether entropy encoding is performed. For example, the first device 110 may be indicated whether to perform arithmetic coding after quantizing a processed parameter. In some examples, the entropy encoding indication information may be indicated by using one bit. For example, "0" indicates that entropy encoding is performed, and "1" indicates that entropy encoding is not performed. In some other examples, the entropy encoding indication information may alternatively be indicated by using more bits. This is not limited in this disclosure.

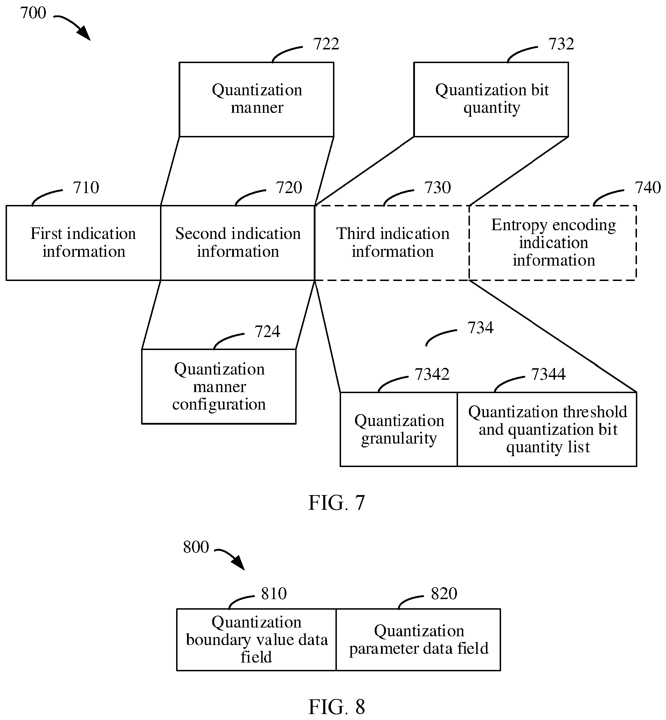

FIG. 7 is a schematic of a compression configuration message 700 according to some embodiments of this disclosure. As shown in FIG. 7, the compression configuration message 700 includes first indication information 710 and second indication information 720, and optionally may further include third indication information 730 and/or entropy encoding indication information 740. The second indication information 720 may indicate a quantization manner 722, or may indicate a quantization manner configuration 724. The third indication information 730 may indicate a quantization bit quantity 732 or may indicate a quantization bit quantity configuration 734, where the quantization bit quantity configuration 734 may include a quantization granularity 7342, and a quantization threshold and quantization bit quantity list 7344.

The second device 120 sends 620 the compression configuration message to the first device 110. In some examples, the second device 120 may send the compression configuration message by using signaling. For example, the second device 120 is an access network device, the first device 110 is a terminal device, and in this case, optionally, the signaling may be physical layer signaling or radio resource control (Radio Resource Control, RRC) layer signaling.

The second device 120 sends 630 a to-be-trained parameter to the first device 110. The to-be-trained parameter may be the foregoing initial model parameter of a neural network, or may be an updated model parameter obtained through a previous round of training. The to-be-trained parameter may include a parameter that is of the neural network and that is associated with a network structure, for example, a weight parameter. The to-be-trained parameter may include a parameter that is of the neural network and that is used for iteration, for example, a gradient parameter.

In some examples, the second device 120 may send the compression configuration message and the to-be-trained parameter together to the first device 110. In some other examples, the second device 120 may separately send the compression configuration message and the to-be-trained parameter to the first device 110 by using different signaling. This is not limited in this disclosure.

It may be understood that, in this embodiment of this disclosure, the second device 120 sends the compression configuration message and the to-be-trained parameter to a plurality of first devices 110, for example, N1 first devices 110 or N2 first devices 110 described with reference to FIG. 1. For brevity of description, this embodiment of this disclosure is described by using one first device 110. Operations performed on other first devices 110 are similar, and details are not described in this specification.

Correspondingly, the first device 110 may receive the compression configuration message and the to-be-trained parameter from the second device 120. The first device 110 may obtain 640 a parameter of a distributed training model based on the to-be-trained parameter. Specifically, the first device 110 may train a network model based on the to-be-trained parameter by using a local dataset, to obtain a parameter through a current round of training, that is, the parameter of the distributed training model.

The first device 110 may determine 650 a parameter division manner, a quantization manner, and a quantization bit quantity based on the compression configuration message. The following separately describes, by using different compression configuration messages, corresponding embodiments in which the first device 110 determines the parameter division manner, the quantization manner, and the quantization bit quantity.

In some embodiments of this disclosure, the compression configuration message includes first indication information, second indication information, and third indication information. The first indication information indicates the parameter division manner, the second indication information indicates the quantization manner, and the third indication information indicates the quantization bit quantity. In this case, the first device 110 may read the parameter division manner, the quantization manner, and the quantization bit quantity from the compression configuration message. It may be understood that the quantization manner is used for a plurality of groups obtained through division in the parameter division manner, and the quantization bit quantity is used for the plurality of groups.

In some embodiments of this disclosure, the compression configuration message includes first indication information and second indication information. The first indication information indicates the parameter division manner, and the second indication information indicates the quantization manner. However, the compression configuration message does not include third indication information. In this case, the first device 110 may read the parameter division manner and the quantization manner from the compression configuration message, and the first device 110 may determine the quantization bit quantity.

Optionally, the first device 110 may determine the quantization bit quantity based on a value of a parameter, a distribution status of the value of the parameter, and the like. Optionally, the first device 110 may determine the quantization bit quantity based on one or more of the following: a transmission resource from the first device 110 to the second device 120, and a loss function for training.

It may be understood that the first device 110 may determine the quantization bit quantity, and that the quantization bit quantity is used for each group, that is, a coarse-grained quantization bit quantity. Alternatively, the first device 110 may determine the quantization bit quantity for each group, that is, a fine-grained quantization bit quantity.

In some embodiments of this disclosure, the compression configuration message includes first indication information and second indication information. The first indication information indicates the parameter division manner, and the second indication information indicates a quantization manner configuration. However, the compression configuration message does not include third indication information. In this case, the first device 110 may read the parameter division manner from the compression configuration message.

The first device 110 may determine the quantization manner based on the quantization manner configuration. In some embodiments, the quantization manner configuration indicates that a plurality of groups use a same quantization manner. In this case, the first device 110 may determine the quantization manner, and the quantization manner is used for each group. In some other embodiments, the quantization manner configuration indicates that the quantization manner is separately determined for a plurality of groups. In this case, the first device 110 may determine the quantization manner of a corresponding group based on a threshold in the quantization manner configuration.

For example, an $i^{th}$ group of the plurality of groups is used as an example. It is assumed that a maximum value of a plurality of parameters in the $i^{th}$ group is $max_i$, a minimum value is $min_i$, and $min_i < 0 < max_i$ is satisfied. In an example, if $max(max_i, |min_i|) - min(max_i, |min_i|) < thres$, it may be determined that a quantization manner of the $i^{th}$ group is a symbol quantization manner. In another example, if $max(max_i, |min_i|) \big/ min(max_i, |min_i|) < thres$, it may be determined that the quantization manner of the $i^{th}$ group is a symbol quantization manner. $|min_i|$ indicates an absolute value of $min_i$, where max() indicates that a maximum value is obtained, min() indicates that a minimum value is obtained, and *thres* indicates a threshold. It may be understood that this example is merely an example. In an actual scenario, other manners may be used to determine the quantization manner based on the threshold, and are not listed one by one in this disclosure.

The first device 110 may determine the quantization bit quantity. Optionally, the first device 110 may determine the quantization bit quantity based on a value of a parameter, a distribution status of the value of the parameter, and the like. Optionally, the first device 110 may determine the quantization bit quantity based on one or more of the following: a transmission resource from the first device 110 to the second device 120, and a loss function for training.

It may be understood that the first device 110 may determine the quantization bit quantity, and that the quantization bit quantity is used for each group, that is, a coarse-grained quantization bit quantity. Alternatively, the first device 110 may determine the quantization bit quantity for each group, that is, a fine-grained quantization bit quantity.

In some embodiments of this disclosure, the compression configuration message includes first indication information, second indication information, and third indication information. The first indication information indicates the parameter division manner, the second indication information indicates a quantization manner configuration, and the third indication information indicates a quantization bit quantity configuration. In this case, the first device 110 may read the parameter division manner from the compression configuration message.

The first device 110 may determine a quantization manner based on the quantization manner configuration. In some embodiments, the quantization manner configuration indicates that a plurality of groups use a same quantization manner. In this case, the first device 110 may determine the quantization manner, and the quantization manner is used for each group. In some other embodiments, the quantization manner configuration indicates that the quantization manner is separately determined for a plurality of groups. In this case, the first device 110 may determine the quantization manner of a corresponding group based on a threshold in the quantization manner configuration. For a specific example, refer to the foregoing embodiment.

The first device 110 may determine the quantization bit quantity based on the quantization bit quantity configuration, where the quantization bit quantity configuration includes a quantization granularity, a quantization threshold list, and a quantization list. For example, the first device 110 may determine a to-be-compared value (represented as *d*), compare the to-be-compared value with two thresholds in the quantization threshold list, to determine a quantization threshold interval in which the to-be-compared value is located, and then determine the quantization bit quantity in the quantization list corresponding to the quantization threshold interval.

Specifically, it is assumed that the quantization threshold list includes $(T_1, T_2, ... , T_K)$ and the quantization list may

include ($b_0$, $b_1$, $b_2$, ... , $b_K$). The to-be-compared value is represented as $d$, and the determined quantization bit quantity is represented as quan$_{bit}$; and in this case, the following formula is satisfied:

$$\text{quan}_{\text{bit}} = \begin{cases} b_0, & d < T_1 \\ b_1, & T_1 \leq d < T_2 \\ \vdots & \vdots \\ b_K, & d \geq T_K \end{cases}.$$

For example, the to-be-compared value may be determined based on a loss function, magnitudes of values of a plurality of parameters in a group obtained through division, or the like.

In some embodiments, the quantization bit quantity configuration includes the quantization granularity, and the quantization granularity indicates a coarse granularity. In other words, the plurality of groups use a same quantization bit quantity. The first device 110 may compare the loss function obtained in a current round of training with a quantization threshold in the quantization bit quantity configuration, and determine the quantization bit quantity based on a comparison result.

For example, for a specific quantity of training samples, that is, a batch (batch) block, it is assumed that a loss function of the batch before the current round of training is $x$, and a loss function of the batch after the current round of training is $y$. abs($y$ - $x$) may be compared with the quantization threshold, where abs represents obtaining an absolute value or performing a modulo operation. It is assumed that the quantization threshold list includes ($T_1$, $T_2$, ... , $T_K$) and the quantization list may include ($b_0$, $b_1$, $b_2$, ... , $b_K$). If $T_1 \leq$ abs($y$ - $x$) $< T_2$ is satisfied, it may be determined that the quantization bit quantity is $b_1$.

Optionally, the first device 110 may further determine an index corresponding to the quantization bit quantity. The index may indicate a location of the determined quantization bit quantity in the quantization list. For example, the index corresponding to $b_2$ may be 2.

In some embodiments, the quantization bit quantity configuration includes the quantization granularity, and the quantization granularity indicates a fine granularity. In other words, quantization bit quantities need to be respectively determined for different groups. For each group, the first device 110 may compare a value range of the plurality of parameters in the group with the quantization threshold in the quantization bit quantity configuration, and determine a quantization bit quantity based on a comparison result.

For example, an $i^{th}$ group of the plurality of groups is used as an example. Assuming that a maximum value of a plurality of parameters in the $i^{th}$ group is $max_i$ and a minimum value is $min_i$, abs($max_i$ - $min_i$) may be compared with the quantization threshold, where abs represents obtaining an absolute value or performing a modulo operation. It is assumed that the quantization threshold list includes ( $T_1$, $T_2$, ... , $T_K$ ) and the quantization list may include ($b_0$, $b_1$, $b_2$, ... , $b_K$). If $T_1 \leq$ abs($max_i$ - $min_i$) $< T_2$ is satisfied, it may be determined that a quantization bit quantity of the $i^{th}$ group is $b_1$.

In this manner, the first device 110 may determine a plurality of quantization bit quantities respectively corresponding to the plurality of groups. Optionally, the first device 110 may further determine an index corresponding to each quantization bit quantity. The index may indicate a location of a quantization bit quantity used by the group in the quantization list. For example, an index corresponding to the quantization bit quantity $b_2$ of the $i^{th}$ group may be 2.

It may be understood that the to-be-compared value in this embodiment of this disclosure may alternatively be determined based on other factors, for example, a quantity of the plurality of parameters in a group, and a size of a transmission resource, which are not listed one by one in this disclosure. It may be understood that, in some examples, $T_1$ in the quantization threshold may be set to be close to 0, for example, $10^{-3}$ or another value, and correspondingly, $b_0$ in the quantization list may be set to 0. For a $j^{th}$ group of the plurality of groups, if a quantization bit quantity is determined as $b_0$, it may be considered that data corresponding to the quantization bit quantity does not need to be sent to the second device 120. For example, a quantization parameter for the $j^{th}$ group may include only a quantization boundary value, for example, $max_j$ and $min_j$.

The first device 110 determines 660 a plurality of quantization groups based on parameters of the distributed training model. For example, each quantization group may include a quantization boundary value and a plurality of quantization parameters.

Specifically, the first device 110 may divide the parameters of the distributed training model into a plurality of groups in the parameter division manner. In some examples, the first device 110 may determine the quantization boundary value of each of the plurality of groups in the quantization manner. The first device 110 may determine a plurality of quantization parameters of each of the plurality of groups based on the quantization bit quantity. In some other examples, for each of the plurality of groups, the first device 110 may determine the quantization boundary value of the group in the quantization manner of the group, and determine the plurality of quantization parameters of the group based on a quantization bit quantity of the group.

For example, a process 660 of determining the plurality of quantization groups may also be referred to as a quantization process or a compression process. It should be noted that the process 660 and the foregoing process 650 may be performed in a cross manner. For example, the parameters may be first divided into the plurality of groups in the parameter division manner, and then the quantization manner and the quantization bit quantity are determined based on values of a plurality of parameters in each group, and the like.

The quantization processing may include: dividing the parameters into the plurality of groups in the parameter division manner; and for each group, determining the quantization boundary value based on the quantization manner, and determining, based on the quantization bit quantity, the plurality of quantization parameters corresponding to the plurality of parameters in the group. For the quantization manner, refer to the foregoing descriptions with reference to FIG. 2. For brevity, details are not described herein again.

Optionally, the first device 110 may perform entropy encoding 670.

In some embodiments, the compression configuration message may include entropy encoding indication information, and the entropy encoding indication information indicates to perform entropy encoding. In this case, the first device 110 may further perform entropy encoding on the quantization parameter.

In some other embodiments, although the compression configuration message does not include entropy encoding indication information, or the compression configuration message includes the entropy encoding indication information, and the entropy encoding indication information indicates not to perform entropy encoding, the first device 110 may determine to perform entropy encoding, and the first device 110 may further perform entropy encoding on the quantization parameter. For example, if the first device 110 determines that a compression rate of the quantization parameter is less than a compression rate threshold, the first device 110 may determine to perform entropy encoding.

The first device 110 sends 680 the plurality of quantization groups to the second device 120. In some examples, the plurality of quantization groups may be a plurality of quantization groups obtained through entropy encoding. Correspondingly, the second device 120 may receive the plurality of quantization groups from the first device 110.

In some examples, the first device 110 may determine compressed data based on the plurality of quantization groups, and send the compressed data to the second device 120. FIG. 8 is a schematic of compressed data 800 according to some embodiments of this disclosure. The compressed data 800 includes a quantization boundary value data field 810 and a quantization parameter data field 820. The quantization boundary value data field 810 may include quantization boundary values in a plurality of quantization groups. In an example, (min1, max1), (min2, max2), and so on may be included. In another example, (min1, min2, ...) and (max1, max2, ...) may be included. In still another example, (max1, max2, ...) may be included. The quantization parameter data field 820 may include a quantization parameter in the plurality of quantization groups, or may include an entropy-encoded quantization parameter.

Optionally, in some embodiments of this disclosure, a first device 110 may send 6822 a quantization bit feedback message to a second device 120. As described above, a compression configuration message may include first indication information, second indication information, and third indication information. The first indication information indicates a parameter division manner, the second indication information indicates a quantization manner, and the third indication information indicates a quantization bit quantity.

The first device 110 may determine another quantization bit quantity based on a parameter of a distributed training model. The quantization bit feedback message may indicate the another quantization bit quantity, for example, another minimum quantization bit quantity that is determined by the first device 110 and that is needed to quantize the parameter of the distributed training model. Optionally, the quantization bit feedback message and the plurality of quantization groups may be sent to the second device 120 together by using same signaling. Alternatively, optionally, the quantization bit feedback message and the plurality of quantization groups may be separately sent to the second device 120 by using different signaling.

The second device 120 may determine, based on a transmission resource quantity and the like, whether to accept the another quantization bit quantity included in the quantization bit feedback message. Optionally, the second device 120 may send 6824 a quantization bit response message to the first device 110, where the quantization bit response message may indicate to accept or reject the another quantization bit quantity. If the second device 120 accepts, the second device 120 may subsequently send, to the first device 110, the compression configuration message for a next round of training, and the third indication information in the compression configuration message may indicate the another quantization bit quantity.

Optionally, in some embodiments of this disclosure, a first device 110 may send 6842 indication information of a quantization bit quantity to a second device 120. As described above, a compression configuration message may include first indication information and second indication information. The first indication information indicates a parameter division manner, and the second indication information indicates a quantization manner. The compression configuration message does not include third indication information.

The first device 110 may send, to the second device 120, the quantization bit quantity used to obtain the plurality of quantization groups, so that the second device 120 performs subsequent dequantization based on the quantization bit quantity. Optionally, the quantization bit quantity and the plurality of quantization groups may be sent together to the second device 120 by using same signaling. Alternatively, optionally, the quantization bit quantity and the plurality of quantization groups may be separately sent to the second device 120 by using different signaling.

Optionally, in some embodiments of this disclosure, a first device 110 may send 6862 a quantization indication message to a second device 120, where the quantization indication message may indicate a quantization manner and a quantization bit quantity that are used by the first device 110. As described above, if a compression configuration message includes first indication information, second indication information, and third indication information, the first indication information indicates parameter division manner, the second indication information indicates a quantization manner configuration, and the third indication information indicates a quantization bit quantity configuration. As described above, the first device 110 may determine the quantization manner based on the quantization manner configuration, and may determine the quantization bit quantity based on the quantization bit quantity configuration.

For example, the second indication information indicates the quantization manner configuration, and the quantization manner configuration indicates that a plurality of groups use a same quantization manner. In this case, the quantization indication message may indicate the used quantization manner by using one bit. For example, the second indication information indicates the quantization manner configuration, and the quantization manner configuration indicates that different groups use different quantization manners. In this case, the quantization indication message may separately indicate the quantization manners of the plurality of groups by using a plurality of bits.

For example, the third indication information indicates the quantization bit quantity configuration, and the quantization bit quantity configuration includes a quantization granularity, a quantization threshold list, and a quantization list. In this case, the quantization indication message may indicate the used quantization bit quantity by using an index. It may be understood that for a case of a coarse granularity, there is one index. For a case of a fine granularity, there are a plurality of indexes corresponding to the plurality of groups. For descriptions of the index, refer to the corresponding embodiment in the foregoing process 650.

Optionally, the first device 110 may further send 6882 entropy encoding indication information to the second device 120. For example, when the compression configuration message does not include the entropy encoding indication information, the first device 110 may notify, by using the entropy encoding indication information, the second device 120 whether entropy encoding is performed. For example, one bit may be used for indication. In this way, the second device 120 may successfully decompress received data based on this.

The second device 120 performs dequantization 690 on the plurality of quantization groups. Specifically, the second device 120 may dequantize the plurality of quantization groups based on the parameter division manner, the quantization manner, and the quantization bit quantity. For descriptions of dequantization, refer to the foregoing corresponding embodiment with reference to FIG. 2. For brevity, details are not described herein again.

For example, the second device 120 obtains, based on the plurality of quantization groups from a plurality of first devices 110, a to-be-trained parameter of a next round by dequantization and aggregation. Optionally, the second device 120 may send the compression configuration message again, as shown in processes 610 and 620. Alternatively, optionally, if the compression configuration message for the next round is the same as the compression configuration message for a previous round, the second device 120 may skip sending the compression configuration message for the next round. For the first device 110, if the first device 110 does not receive the compression configuration message for a current round, the first device 110 may use the compression configuration message for the previous round. In this way, repeated transmission of same content can be avoided, and signaling overheads can be reduced.

According to the embodiments described above with reference to FIG. 6 to FIG. 8, the first device 110 can quantize the parameter of the distributed training model based on the compression configuration message, to implement parameter compression. In this process, factors such as a transmission resource and a value of a parameter are considered, to ensure both communication efficiency and parameter performance during parameter compression. A performance loss caused by over-compression is avoided, and a long delay caused by a low compression rate is also avoided.

In this embodiment of this disclosure, a transmission resource for sending a plurality of quantization bits by the first device 110 to the second device 120 may be allocated by the second device 120, or may be allocated by the second device 120 after the first device 110 sends a resource request.

For example, it is assumed that the first device 110 is a terminal device, and the second device 120 is an access network device. In some examples, the second device 120 may indicate, by using resource indication information, a transmission resource used by the first device 110 for transmission to the second device 120, and optionally may indicate an encoding and modulation solution. In some other examples, the first device 110 may send the resource request to the second device 120, and the first device 110 may receive a resource allocation message from the second device 120. The first device 110 may then send the plurality of quantization groups to the second device 120 on an allocated resource. For example, the resource request may be a buffer state report (Buffer State Report, BSR) of a medium access control (Medium Access Control, MAC) layer. For transmission resource scheduling and the like, refer to a conventional technology. Details are not described in this specification.

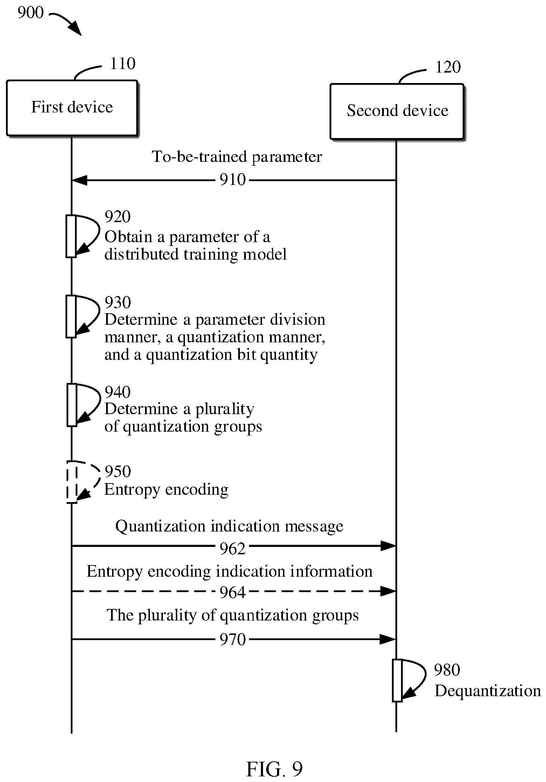

FIG. 9 is a signaling interaction schematic of an information transmission process 900 according to some embodiments of this disclosure. The process 900 relates to a first device 110 and a second device 120. The first device 110 in FIG. 9 may include any one of a first device 110-1 to a first device 110-N in FIG. 1.

The second device 120 sends 910 a to-be-trained parameter to the first device 110. The to-be-trained parameter may be the foregoing initial model parameter of a neural network, or may be an updated model parameter obtained through a previous round of training. The to-be-trained parameter may include a parameter that is of the neural network and that is associated with a network structure, for example, a weight parameter. The to-be-trained parameter may include a parameter that is of the neural network and that is used for iteration, for example, a gradient parameter. It may be understood that, in this embodiment of this disclosure, the second device 120 sends the to-be-trained parameters to the plurality of first devices 110, for example, the N1 first devices 110 or the N2 first devices 110 described with reference to FIG. 1. For brevity of description, this embodiment of this disclosure is described by using one first device 110. Operations performed on other first devices 110 are similar, and details are not described in this specification.

Correspondingly, the first device 110 may receive the to-be-trained parameter from the second device 120. The first device 110 may obtain 920 a parameter of a distributed training model based on the to-be-trained parameter. Specifically, the first device 110 may train a network model based on the to-be-trained parameter by using a local dataset, to obtain a parameter through a current round of training, that is, the parameter of the distributed training model.

The first device 110 determines 930 a parameter division manner, a quantization manner, and a quantization bit quantity. Specifically, the first device 110 may determine the parameter division manner, the quantization manner, and the quantization bit quantity based on one or more of the following factors: a transmission resource from the first device 110 to the second device 120, a quantity of network layers of a distributed neural network, and a loss function for training.

Refer to a process 610 in which a second device 110 determines a parameter division manner in FIG. 6. The first device 110 may similarly determine the parameter division manner. For brevity, details are not described herein again. For example, the parameter division manner is a type-based division manner, a matrix-based division manner, a network layer-based division manner, or the like.

Correspondingly, the first device 110 may divide the parameters of the distributed training model into a plurality of groups in the determined parameter division manner.

Refer to the process 610 of determining a quantization manner by the second device 110 in FIG. 6. The first device 110 may similarly determine the quantization manner. For brevity, details are not described herein again. In some embodiments, the first device 110 may determine the quantization manner, and the quantization manner is used for a plurality of groups. In some other embodiments, the first device 110 may separately determine the quantization manner for a plurality of groups. For example, the quantization manner is a conventional quantization manner or a symbol quantization manner.

Correspondingly, the first device 110 may determine a quantization boundary value of each of the plurality of groups in the determined quantization manner.

In some examples, the first device 110 may determine the quantization bit quantity, and use the quantization bit quantity in the plurality of groups. In other words, the quantization bit quantity may be a coarse-grained quantization bit quantity. In some other examples, the first device 110 may determine the quantization bit quantity for each group. In other words, the quantization bit quantity may be a fine-grained quantization bit quantity.

Correspondingly, the first device 110 may determine a plurality of quantization parameters of each of the plurality of groups by using the determined quantization bit quantity.

The first device 110 determines 940 a plurality of quantization groups based on the parameter of the distributed training model. For example, each quantization group may include a quantization boundary value and a plurality of quantization parameters. For the process, refer to a process 660 in FIG. 6. For brevity, details are not described herein again.

Optionally, the first device 110 may perform entropy encoding 950. For example, the first device 110 may determine, based on compression rates of the plurality of quantization groups, and the like, whether to perform entropy encoding.

The first device 110 sends 962 a quantization indication message to the second device 120. The quantization indication message may include first indication information and second indication information. Optionally, the quantization indication message may include third indication information.

The first indication information may indicate the parameter division manner determined by the first device 110, for example, the type-based division manner, the matrix-based division manner, or the network layer-based division manner.

The second indication information may indicate the quantization manner determined by the first device 110. In some examples, the plurality of groups have a same quantization manner. The second indication information may be indicated by using one bit. For example, "0" indicates the conventional quantization manner, and "1" indicates the symbol quantization manner. Alternatively, the second indication information may be indicated by using two bits, where one bit indicates that each group uses a same quantization manner, and the other bit indicates the quantization manner. In some other examples, the plurality of groups have different quantization manners. It is assumed that the parameters are divided into m3 groups in the determined parameter division manner. The second indication information may be indicated by using m3+1 bits. For example, one bit (for example, a first bit) indicates whether each group uses the same quantization manner, and the other m3 bits respectively indicate quantization manners of the m3 groups. Alternatively, the second indication information may be indicated by using m3 bits to respectively represent quantization manners of the m3 groups.

Optionally, in some examples, the quantization indication message may not include the second indication information. For example, it is assumed that the first device 110 determines to use the symbol quantization manner (where a same quantization manner is used for each group), and the quantization boundary value includes only a maximum value of an absolute value. In this case, even if the quantization indication message may not include the second indication information, the second device 120 can still determine the quantization manner. For example, the second device 120 can calculate a total length of the quantization parameters of all quantization groups, and then calculate a quantity of quantization boundary values. If the quantity is equal to the parameter group, it indicates that the quantization boundary value includes the maximum value of the absolute value, and it may be determined that the quantization manner is the symbol quantization manner. If the quantity is equal to twice of the parameter group, it indicates that the quantization boundary value includes a maximum value and a minimum value, and it may be determined that the quantization manner is the conventional quantization manner.

The third indication information may indicate the quantization bit quantity determined by the first device 110. In some examples, the plurality of groups have a same quantization bit quantity. The third indication information may be indicated by using m2 bits. For example, a coarse-grained quantization bit quantity is less than $2^{m2}$. In some other examples, the quantization bit quantities of the plurality of groups are different, the third indication information may indicate a quantization granularity and a quantization list, and the third indication information further indicates an index of the quantization bit quantities of the plurality of groups. In this way, the second device 120 can determine the quantization bit quantity of each group based on the index and the quantization list.

For the quantization granularity and the quantization list, refer to related descriptions in the embodiment in FIG. 6. For example, the quantization granularity indicates whether the plurality of groups use the same quantization bit quantity. For example, the quantization list includes $(b_0, b_1, b_2, \ldots, b_K)$.

For the index, refer to related descriptions in the embodiment in FIG. 6. It may be understood that the index corresponding to different groups may be the same. For example, two groups in the plurality of groups have an equal quantization bit quantity.

Optionally, in some embodiments, the quantization indication message may not include the third indication information. In this case, the second device 120 may determine the quantization bit quantity based on the plurality of quantization groups. For example, each quantization group includes a quantization boundary value and a plurality of quantization parameters. For example, when overheads (a bit quantity) occupied by the quantization boundary value are less than a quantity of the plurality of quantization parameters, assuming that a total quantity of bits occupied by the plurality of quantization groups is $p1$, and the quantity of the plurality of quantization parameters is n3, the quantization bit quantity may be determined by using $\lfloor p1/n3 \rfloor$, where $\lfloor \rfloor$ represents rounding down. In this manner, the second device 120 can determine the quantization bit quantity, so that the quantization bit quantity does not need to be indicated by using the third indication information. In this way, signaling overheads can be reduced.

Optionally, in some embodiments, the quantization indication message may not include the third indication information. For example, the second device 120 can calculate a total length of the quantization parameters of all quantization groups, and then calculate a quantity of quantization boundary values. If the quantity is equal to the parameter group, it indicates that the quantization boundary value includes a maximum value of an absolute value, and it may be determined that the quantization manner is the symbol quantization manner. If the quantity is equal to twice of the parameter group, it indicates that the quantization boundary value includes a maximum value and a minimum value, and it may be determined that the quantization manner is the conventional quantization manner. The second device 120 can further determine a quantized parameter length, and divide the quantized parameter length by the quantity of parameters to obtain a common quantization bit quantity of each parameter group.

Optionally, if a quantization indication message for a current round is the same as a quantization indication message for a previous round, the first device 110 may determine not to send the quantization indication message for the current round. For the second device 120, if no quantization indication message corresponding to the plurality of quantization groups of the current round is received, the quantization indication message of the previous round may be used to perform dequantization on the plurality of quantization groups of the current round. In this way, repeated transmission of same content can be avoided, and signaling overheads can be reduced.

Optionally, the first device 110 may further send 964 entropy encoding indication information to the second device 120. For example, the first device 110 may notify, by using the entropy encoding indication information, the second device 120 whether entropy encoding is performed. For example, one bit may be used for indication. In this way, the second device 120 may successfully decompress received data based on this.

Optionally, the quantization indication message and the plurality of quantization groups may be carried in same signaling, or the quantization indication message and the plurality of quantization groups may be carried in different signaling. Optionally, the entropy encoding indication information and the plurality of quantization groups may be carried in same signaling, or the entropy encoding indication information and the plurality of quantization groups may be carried in different signaling. This is not limited in this disclosure.

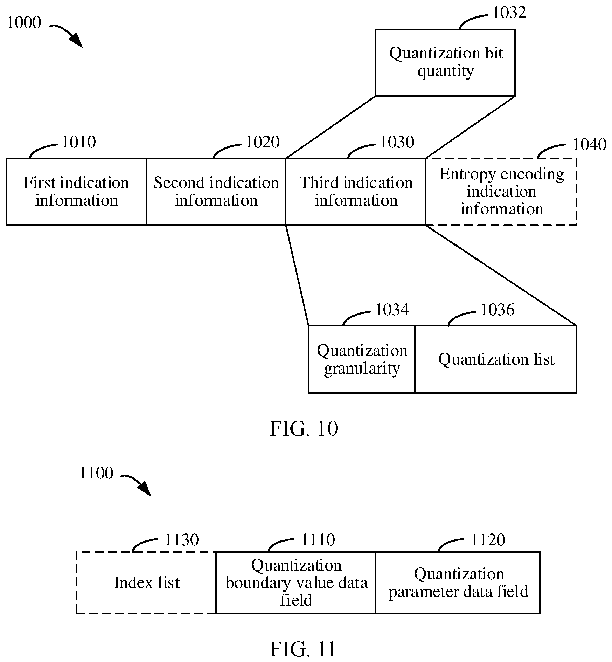

In some examples, it is assumed that the quantization indication message and the entropy encoding indication information are carried in the same signaling. For example, the quantization indication message includes the first indication information, the second indication information, the third indication information, and the entropy encoding indication information. FIG. 10 is a schematic of a quantization indication message 1000 according to some embodiments of this disclosure. As shown in the figure, the quantization indication message 1000 includes first indication information 1010, second indication information 1020, and third indication information 1030, and optionally may further include entropy encoding indication information 1040. The third indication information 1030 may indicate a quantization bit quantity 1032, or the third indication information 1030 may indicate a quantization granularity 1034 and a quantization list 1036.

It should be noted that the foregoing descriptions with reference to FIG. 10 is merely an example, and should not be construed as a limitation on this embodiment of this disclosure. For example, as described above with reference to a process 962, the quantization indication message may not include the third indication information. For another example, in some embodiments, the quantization indication message may not include the first indication information. For example, a method for determining a division manner is preset for a first device 110 and a second device 120. In this case, the first device 110 and the second device 120 may determine the division manner based on the preset determining method. In this way, the first indication information does not need to be included in the quantization indication message, and signaling overheads can be reduced. Optionally, for example, the preset determining method includes: Assuming that a parameter may be divided into r1 groups in a type-based division manner, and that the parameter may be divided into r2 groups in a matrix-based division manner, the division manner is determined based on a relationship between r2-r1 and a predetermined value (for example, s and d), as described above with reference to related descriptions of the process 610.

The first device 110 sends 970 a plurality of quantization groups to the second device 120. In some examples, the plurality of quantization groups may be a plurality of quantization groups obtained through entropy encoding. Correspondingly, the second device 120 may receive the plurality of quantization groups from the first device 110.

Optionally, in some examples, the third indication information in the quantization indication message indicates the quantization granularity and the quantization list, and in this case, a corresponding index may be further sent to the second device 120. For example, the index may indicate a location of a corresponding quantization bit quantity in a quantization bit quantity list shown in FIG. 7.

In some examples, the first device 110 may determine compressed data based on the plurality of quantization groups, and send the compressed data to the second device 120. FIG. 11 is a schematic of compressed data 1100 according to some embodiments of this disclosure. The compressed data 1100 includes a quantization boundary value data field 1110 and a quantization parameter data field 1120, and optionally may further include an index list 1130. The quantization boundary value data field 1110 may include quantization boundary values in a plurality of quantization groups. In an example, (min1, max1), (min2, max2), and so on may be included. In another example, (min1, min2, ...) and (max1, max2, ...) may be included. In still another example, (max1, max2, ...) may be included. The quantization parameter data field 1120 may include a quantization parameter in the plurality of quantization groups, or may include an entropy-encoded quantization parameter. The index list 1130 may include an index corresponding to a quantization bit quantity of each group. Optionally, as shown in FIG. 11, the index list 1130 may be independent of the quantization boundary value data field 1110 and the quantization parameter data field 1120. In some other examples, the index list may be included in the quantization boundary value data field 1110, for example, may include (min1, max1, index1), (min2, max2, index2), and so on, or may include, for example, (min1, min2, ...), (max1, max2, ...), and (index1, index2, ...), where index1 represents an index of a quantization bit quantity used by a group whose quantization boundary values are min1 and max1, and index2 indicates an index of a quantization bit quantity used by a group whose quantization boundary values are min2 and max2.

The second device 120 performs dequantization 980 on the plurality of quantization groups. Specifically, the second device 120 may dequantize the plurality of quantization groups based on quantization indication information from the first device 110. For descriptions of dequantization, refer to the foregoing corresponding embodiment with reference to FIG. 2. For brevity, details are not described herein again.

In this embodiment of this disclosure, a transmission resource for sending a plurality of quantization bits by the first device 110 to the second device 120 may be allocated by the second device 120, or may be allocated by the second device 120 after the first device 110 sends a resource request. Descriptions in the foregoing embodiment of this disclosure are used as an example.

According to the embodiments described above with reference to FIG. 9 to FIG. 11, the first device 110 can quantize a parameter of a distributed training model, to implement parameter compression. In this process, factors such as a transmission resource and a value of a parameter are considered, to ensure both communication efficiency and parameter performance during parameter compression. A performance loss caused by over-compression is avoided, and a long delay caused by a low compression rate is also avoided.

It should be understood that, in embodiments of this disclosure, "first", "second", "third", and the like are only intended to indicate that a plurality of objects may be different, but two objects may be the same. "First", "second", "third", and the like should not be construed as any limitation on embodiments of this disclosure.

It should be further understood that division into the manners, cases, categories, and embodiments in embodiments of this application is only intended for ease of description, and should not constitute a particular limitation. The features in the manners, categories, cases, and embodiments may be combined with each other if logical.

It should be further understood that the foregoing content descriptions focus on differences between embodiments. For same or similar parts, refer to each other. For brevity, details are not described herein again.

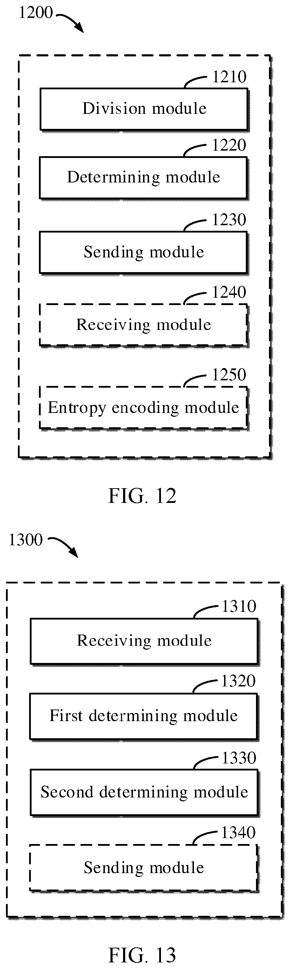

FIG. 12 is a block schematic of a communication apparatus 1200 according to some embodiments of this disclosure. The apparatus 1200 may be implemented as a first device 110 shown in FIG. 1, or may be implemented as a part (for example, a chip) of the first device 110, or the like. This is not limited in this disclosure.

As shown in FIG. 12, the apparatus 1200 may include a division module 1210, a determining module 1220, and a sending module 1230, and optionally further include a receiving module 1240 and/or an entropy encoding module 1250. The division module 1210 is configured to divide parameters of a distributed training model into a plurality of groups, where numerical intervals of at least two of the plurality of groups are different. The determining module 1220 is configured to determine, based on a quantization bit quantity corresponding to each of the plurality of groups, a plurality of quantization groups corresponding to the plurality of groups, where the quantization bit quantity is determined based on at least one of the following: a transmission resource quantity between the communication apparatus and a second device, a loss function value, or a value range of a parameter of each group. The sending module 1230 is configured to send the plurality of quantization groups to the second device.

The determining module 1220 may be configured to determine, based on a plurality of first parameters in a first group of the plurality of groups, a quantization boundary value corresponding to the first group. The quantization boundary value includes a maximum value and/or a minimum value. The maximum value is a maximum value of the plurality of first parameters, or the maximum value is a maximum value of a plurality of absolute values of the plurality of first parameters, and the minimum value is a minimum value of the plurality of first parameters, or the minimum value is a minimum value of the plurality of absolute values of the plurality of first parameters.

In some embodiments, a quantization group corresponding to the first group includes the quantization boundary value and a plurality of quantization parameters corresponding to the plurality of first parameters.

Optionally, the receiving module 1240 may be configured to receive first indication information from the second device, where the first indication information indicates whether to determine the quantization boundary value based on the absolute values. In addition, the determining module 1220 may be configured to determine the quantization boundary value based on the first indication information. Alternatively, optionally, the sending module 1230 may be configured to send second indication information to the second device, where the second indication information indicates whether the quantization boundary value is determined based on the absolute values.

In some embodiments, each group has an equal quantization bit quantity. In some embodiments, the plurality of groups include the first group and a second group, and a quantization bit quantity corresponding to the first group is not equal to a quantization bit quantity corresponding to the second group.

In some examples, the determining module 1220 may be configured to determine a plurality of quantization bit quantities corresponding to the plurality of groups. In some examples, the determining module 1220 may be configured to determine, based on a quantization bit quantity configuration from the second device, the plurality of quantization bit quantities corresponding to the plurality of groups, where the quantization bit quantity configuration includes a quantization threshold and the corresponding quantization bit quantities. Correspondingly, the receiving module 1240 may be configured to receive the quantization bit quantity configuration from the second device.

Optionally, the sending module 1230 is configured to send third indication information to the second device, where the third indication information indicates the plurality of quantization bit quantities. Alternatively, optionally, the quantization bit quantity is determined by the second device, and the receiving module 1240 is configured to receive fourth indication information from the second device, where the fourth indication information indicates the quantization bit quantity corresponding to each of the plurality of groups.

The division module 1210 may be configured to divide the parameters of the distributed training model into the plurality of groups in a model parameter division manner. In some examples, the determining module 1220 is configured to determine the model parameter division manner based on magnitudes of values of the parameters of the distributed training model. The sending module 1230 may be configured to send fifth indication information to the second device, where the fifth indication information indicates the model parameter division manner. In some other examples, the receiving module 1240 is configured to receive sixth indication information from the second device, where the sixth indication information indicates the model parameter division manner. For example, the model parameter division manner indicates that the division is performed based on at least one of the following: a type of a parameter, a type of a network layer at which the parameter is located, and the like.

The entropy encoding module 1250 is configured to perform entropy encoding on the plurality of quantization groups, and the sending module is configured to send a plurality of entropy-encoded quantization groups to the second device. Optionally, the sending module 1230 is configured to send first entropy encoding indication information to the second device, where the first entropy encoding indication information indicates that the plurality of quantization groups are already entropy-encoded. Alternatively, optionally, the receiving module is configured to receive second entropy encoding indication information from the second device, and the entropy encoding module is configured to perform entropy encoding on the plurality of quantization groups based on the second entropy encoding indication information.

It may be understood that module or unit division in this embodiment of this disclosure is an example, and is merely logical function division. In actual implementation, there may be another division manner. In addition, functional units in the disclosed embodiments may be integrated into one unit, or may exist alone physically, or two or more units are integrated into one unit. The integrated unit may be implemented in a form of hardware, or may be implemented in a form of a software functional unit.

The apparatus 1200 in FIG. 12 can be configured to implement the processes described by the first device 110 in the foregoing embodiments. For brevity, details are not described herein again.

FIG. 13 is a block schematic of a communication apparatus 1300 according to some embodiments of this disclosure. The apparatus 1300 may be implemented as a second device 120 shown in FIG. 1, or may be implemented as a part (for example, a chip) of the second device 120, or the like. This is not limited in this disclosure.

As shown in FIG. 13, the apparatus 1300 may include a receiving module 1310, a first determining module 1320, and a second determining module 1330, and optionally further include a sending module 1340. The receiving module 1310 is configured to receive a plurality of quantization groups from a first device. The first determining module 1320 is configured to determine, based on a quantization bit quantity corresponding to each of the plurality of quantization groups, a plurality of groups corresponding to the plurality of quantization groups, where the quantization bit quantity is determined based on at least one of the following: a transmission resource quantity between the first device and the communication apparatus, a loss function value, or a value range of a parameter of each group. The second determining module 1330 is configured to determine parameters of a distributed training model based on a model parameter division manner and the plurality of groups.

In some embodiments, the first quantization group of the plurality of quantization groups includes a quantization boundary value and a plurality of quantization parameters. The quantization boundary value includes a maximum value and/or a minimum value. The maximum value is a maximum value of a plurality of first parameters in a first group corresponding to the first quantization group, or the maximum value is a maximum value of a plurality of absolute values of the plurality of first parameters, and the minimum value is a minimum value of the plurality of first parameters, or the minimum value is a minimum value of a plurality of absolute values of the plurality of first parameters.

Optionally, the sending module 1340 is configured to send first indication information to the first device, where the first indication information indicates whether to determine the quantization boundary value based on the absolute values. Optionally, the receiving module 1310 is configured to receive second indication information from the first device, where the second indication information indicates whether the quantization boundary value is determined based on the absolute values.

In some embodiments, each quantization group has an equal quantization bit quantity. In some embodiments, the plurality of quantization groups include the first quantization group and a second quantization group, and a quantization bit quantity corresponding to the first quantization group is not equal to a quantization bit quantity corresponding to the second quantization group.

In some examples, the receiving module 1310 is configured to receive third indication information from the first device, where the third indication information indicates a plurality of quantization bit quantities. In some examples, the sending module 1340 is configured to send a quantization bit quantity configuration to the first device, where the quantization bit quantity configuration includes a quantization threshold and the corresponding quantization bit quantities.

In some embodiments, the sending module 1340 is configured to send fourth indication information to the first device, where the fourth indication information indicates the quantization bit quantity corresponding to each of the plurality of groups.

Optionally, the receiving module 1310 is configured to receive fifth indication information from the first device, where the fifth indication information indicates the model parameter division manner. Alternatively, optionally, the sending module 1340 is configured to send sixth indication information to the first device, where the sixth indication information indicates the model parameter division manner. The model parameter division manner indicates that division is performed based on at least one of the following: a type of a parameter, a type of a network layer at which the parameter is located, and the like.

In some embodiments, the receiving module 1310 is configured to receive a plurality of entropy-encoded quantization groups. Optionally, the receiving module 1310 is configured to receive first entropy encoding indication information from the first device, where the first entropy encoding indication information indicates that the plurality of quantization groups are already entropy-encoded. Alternatively, optionally, the sending module 1340 is configured to send second entropy encoding indication information to the first device, to indicate the first device to perform entropy encoding on the plurality of quantization groups.

It may be understood that module or unit division in this embodiment of this disclosure is an example, and is merely logical function division. In actual implementation, there may be another division manner. In addition, functional units in the disclosed embodiments may be integrated into one unit, or may exist alone physically, or two or more units are integrated into one unit. The integrated unit may be implemented in a form of hardware, or may be implemented in a form of a software functional unit.

The apparatus 1300 in FIG. 13 can be configured to implement the processes described by the second device 120 in the foregoing embodiments. For brevity, details are not described herein again.

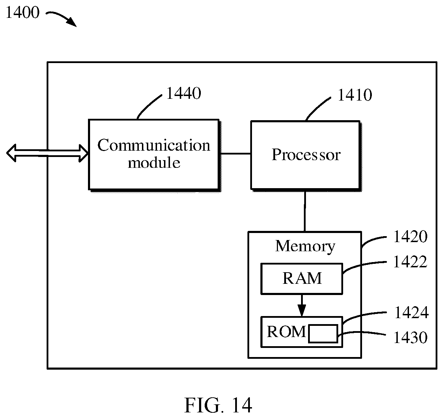

FIG. 14 is a block schematic of an example device 1400 that may be used to implement an embodiment of this disclosure. The device 1400 may be implemented or included in a first device 110 in FIG. 1, or the device 1400 may be implemented or included in a second device 120 in FIG. 1. As shown in the figure, the device 1400 includes one or more processors 1410, one or more memories 1420 coupled to the processors 1410, and a communication module 1440 coupled to the processors 1410.

The communication module 1440 may be configured to perform bidirectional communication. The communication module 1440 may have at least one communication interface for communication. The communication interface may include any interface necessary for communicating with another device.

The processor 1410 may be any type suitable for a native technology network, and may include but is not limited to at least one of the following: a general-purpose computer, a dedicated computer, a microcontroller, a digital signal processor (Digital Signal Processor, DSP), or a controller-based multi-core controller architecture. The device 1400 may have a plurality of processors, such as application-specific integrated circuit chips, which in time belong to a clock synchronized with a main processor.

The memory 1420 may include one or more nonvolatile memories and one or more volatile memories. Examples of the nonvolatile memory include but are not limited to at least one of the following: a read-only memory (Read-Only Memory, ROM) 1424, an erasable programmable read-only memory (Erasable Programmable Read-Only Memory, EPROM), a flash memory, a hard disk, a compact disc (Compact Disc, CD), a digital video disk (Digital Versatile Disc, DVD), or another magnetic storage and/or optical storage. An example of the volatile memory includes but is not limited to at least one of the following: a random access memory (Random Access Memory, RAM) 1422, or another volatile memory that does not persist during power outage duration. Optionally, the memory 1420 may be further integrated with the processor 1410.

A computer program 1430 includes computer-executable instructions executed by an associated processor 1410. The program 1430 may be stored in the ROM 1424. The processor 1410 may perform any suitable action and processing by loading the program 1430 into the RAM 1422.

The embodiments of this disclosure may be implemented by using the program 1430, so that the device 1400 may perform any process discussed with reference to FIG. 2 to FIG. 11. Embodiments of this disclosure may alternatively be implemented by using hardware or a combination of software and hardware.

the program 1430 may be tangibly included in a computer-readable medium, and the computer-readable medium may be included in the device 1400 (for example, in the memory 1420) or another storage device that may be accessed by the device 1400. The program 1430 may be loaded from the computer-readable medium into the RAM 1422 for execution. The computer-readable medium may include any type of tangible nonvolatile memory, for example, a ROM, an EPROM, a flash memory, a hard disk, a CD, or a DVD.

In some embodiments, the communication module 1440 in the device 1400 may be implemented as a transmitter and a receiver (or a transceiver), and may be configured to send/receive a compression configuration message, a to-be-trained parameter, a plurality of quantization groups, and the like. In addition, the device 1400 may further include one or more of a scheduler, a controller, and a radio frequency/an antenna. Details are not described in this disclosure.

For example, the device 1400 in FIG. 14 may be implemented as a communication apparatus, or may be implemented as a chip or a chip system in the communication apparatus. This is not limited in this embodiment of this disclosure.

An embodiment of this disclosure further provides a chip. The chip may include an input interface, an output interface, and a processing circuit. In this embodiment of this disclosure, an input interface and an output interface may complete signaling or data exchange, and a processing circuit may complete generation and processing of signaling or data information.

An embodiment of this disclosure further provides a chip system, including a processor, configured to support a device in implementing a function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device. Optionally, the memory and the processor may be integrated together.

An embodiment of this disclosure further provides a processor, configured to be coupled to a memory. The memory stores instructions. When the processor runs the instructions, the processor is enabled to perform the method and the function in any one of the foregoing embodiments.

An embodiment of this disclosure further provides a computer program product including instructions. When the computer program product runs on a computer, the computer is enabled to perform the method and the function in any one of the foregoing embodiments.

An embodiment of this disclosure further provides a computer-readable storage medium. The computer-readable storage medium stores computer instructions. When a processor runs the instructions, the processor is enabled to perform the method and the function in any one of the foregoing embodiments.

Usually, various embodiments of this disclosure may be implemented by hardware or a dedicated circuit, software, logic, or any combination thereof. Some aspects may be implemented by hardware, and other aspects may be implemented by firmware or software, which may be performed by a controller, a microprocessor, or another device. Although aspects of the embodiments of this disclosure are shown and described as block diagrams, flowcharts, or using some other figures, it should be understood that the blocks, apparatuses, systems, techniques, or methods described herein may be implemented as, as non-limiting examples, hardware, software, firmware, dedicated circuitry or logic, general-purpose hardware or controllers, or other devices, or some combination thereof.

This disclosure further provides at least one computer program product tangibly stored in a non-transitory computer-readable storage medium. The computer program product includes computer-executable instructions, such as instructions included in a program module, which are executed in a device on a real or virtual target processor to perform the process/method as described above with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions used for the program module may be executed locally or in a distributed device. In the distributed device, the program module may be locally located and located in a remote storage medium.

Computer program code used for implementing the method in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, executed partially on a computer, executed as a standalone software package, executed partially on a computer and partially on a remote computer, or executed entirely on a remote computer or a server.

In the context of this disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this disclosure are described in a particular order in the accompanying drawings, this does not require or imply that these operations need to be performed in the particular order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to this disclosure may be specific in one apparatus. Instead, features and functions of one apparatus described above may be further specific in a plurality of apparatuses.

## Claims

1. A data processing method (200) for a distributed learning process in which:

   a second device (120) sends an initial model parameter of a distributed training model to a first plurality of first devices (110);

each first device in the first plurality of first devices performs learning based on a local dataset and the initial model parameter to obtain a processed parameter, compresses the obtained processed parameter, and sends the compressed parameter to the second device;

the second device decompresses the processed parameter from each of the first devices in the first plurality of first devices, obtains an updated model parameter by aggregation, and sends the updated model parameter to a second plurality of first devices; and

each first device in the second plurality of first devices performs learning based on a local dataset and the updated model parameter to obtain a reprocessed parameter, compresses the obtained reprocessed parameter, and sends the compressed reprocessed parameter to the second device,

the method comprising:

dividing (210), by a first device, parameters of the distributed training model into a plurality of groups, wherein numerical intervals of at least two of the plurality of groups are different;

determining (220), by the first device based on a quantization bit quantity corresponding to each of the plurality of groups, a plurality of quantization groups corresponding to the plurality of groups, wherein the quantization bit quantity is determined based on at least one of the following: a transmission resource quantity between the first device and the second device, a loss function value, or a value range of a parameter of each group; and

sending (230), by the first device, the plurality of quantization groups to the second device.

2. The method (200) according to claim 1, further comprising: determining, by the first device (110) based on a plurality of first parameters in a first group of the plurality of groups, a quantization boundary value corresponding to the first group.

3. The method (200) according to claim 2, wherein the quantization boundary value comprises at least one of the following: a maximum value or a minimum value, wherein
the maximum value is a maximum value of values of the plurality of first parameters, or the maximum value is a maximum value of a plurality of absolute values of the plurality of first parameters, and the minimum value is a minimum value of values of the plurality of first parameters, or the minimum value is a minimum value of the plurality of absolute values of the plurality of first parameters.

4. The method (200) according to claim 2 or 3, wherein a quantization group corresponding to the first group comprises the quantization boundary value and a plurality of quantization parameters corresponding to the plurality of first parameters.

5. The method (200) according to any one of claims 2 to 4, further comprising:

receiving, by the first device (110), first indication information from the second device (120), wherein the first indication information indicates whether to determine the quantization boundary value based on the absolute values; and

the determining, by the first device (110), a quantization boundary value corresponding to the first group comprises: determining, by the first device, the quantization boundary value based on the first indication information.

6. The method (200) according to any one of claims 2 to 4, further comprising:
sending, by the first device (110), second indication information to the second device (120), wherein the second indication information indicates whether the quantization boundary value is determined based on the absolute values.

7. The method (200) according to any one of claims 1 to 6, wherein each group has an equal quantization bit quantity.

8. The method (200) according to any one of claims 1 to 6, wherein the plurality of groups comprise the first group and a second group, and a quantization bit quantity corresponding to the first group is not equal to a quantization bit quantity corresponding to the second group.

9. The method (200) according to claim 8, wherein the method further comprises:
determining, by the first device (110), a plurality of quantization bit quantities corresponding to the plurality of groups.

10. The method (200) according to claim 9, wherein the determining, by the first device (110), a plurality of quantization bit quantities corresponding to the plurality of groups comprises:
determining, by the first device based on a quantization bit quantity configuration from the second device (120), the plurality of quantization bit quantities corresponding to the plurality of groups, wherein the quantization bit quantity configuration comprises a quantization threshold and the corresponding quantization bit quantities.

11. The method (200) according to claim 10, further comprising:
receiving, by the first device (110), the quantization bit quantity configuration from the second device (120).

12. The method (200) according to any one of claims 9 to 11, further comprising:
sending, by the first device (110), third indication information to the second device (120), wherein the third indication information indicates the plurality of quantization bit quantities.

13. The method (200) according to any one of claims 1 to 8, wherein the quantization bit quantity is determined by the second device (120), and the method further comprises:
receiving, by the first device (110), fourth indication information from the second device, wherein the fourth indication information indicates the quantization bit quantity corresponding to each of the plurality of groups.

14. The method (200) according to any one of claims 1 to 11, wherein the dividing (210), by a first device (110), parameters of a distributed training model into a plurality of groups comprises:
dividing, by the first device, the parameters of the distributed training model into the plurality of groups in a model parameter division manner.

15. The method (200) according to claim 14, further comprising:

determining, by the first device (110), the model parameter division manner based on magnitudes of values of the parameters of the distributed training model; and
sending, by the first device, fifth indication information to the second device (120), wherein the fifth indication information indicates the model parameter division manner.

**Patentansprüche**

1. Datenverarbeitungsverfahren (200) für einen Prozess verteilten Lernens, in dem:

ein zweites Gerät (120) einen anfänglichen Modellparameter eines verteilten Trainingsmodells an eine erste Mehrzahl erster Geräte (110) sendet;
jedes erste Gerät in der ersten Mehrzahl erster Geräte das Lernen basierend auf einem lokalen Datensatz und dem anfänglichen Modellparameter durchführt, um einen verarbeiteten Parameter zu erhalten, den erhaltenen verarbeiteten Parameter komprimiert und den komprimierten Parameter an das zweite Gerät sendet;
das zweite Gerät den verarbeiteten Parameter von jedem der ersten Geräte in der ersten Mehrzahl erster Geräte dekomprimiert, einen aktualisierten Modellparameter durch Aggregation erhält und den aktualisierten Modellparameter an eine zweite Mehrzahl erster Geräte sendet; und
jedes erste Gerät in der zweiten Mehrzahl erster Geräte das Lernen basierend auf einem lokalen Datensatz und dem aktualisierten Modellparameter durchführt, um einen neu verarbeiteten Parameter zu erhalten, den erhaltenen neu verarbeiteten Parameter komprimiert und den komprimierten neu verarbeiteten Parameter an das zweite Gerät sendet;
wobei das Verfahren Folgendes umfasst:

Aufteilen (210), durch ein erstes Gerät, von Parametern des verteilten Trainingsmodells in eine Mehrzahl von Gruppen, wobei numerische Intervalle von mindestens zwei der Mehrzahl von Gruppen unterschiedlich sind;
Bestimmen (220), durch das erste Gerät basierend auf einer Quantisierungsbitquantität, die jeder der Mehrzahl von Gruppen entspricht, einer Mehrzahl von Quantisierungsgruppen, die der Mehrzahl von Gruppen entspricht, wobei die Quantisierungsbitquantität basierend auf mindestens einem des Folgenden bestimmt wird: einer Übertragungsressourcenquantität zwischen dem ersten Gerät und dem zweiten Gerät, einem Verlustfunktionswert oder einem Wertebereich eines Parameters jeder Gruppe; und
Senden (230), durch das erste Gerät, der Mehrzahl von Quantisierungsgruppen an das zweite Gerät.

2. Verfahren (200) nach Anspruch 1, ferner Folgendes umfassend: Bestimmen, durch das erste Gerät (110) basierend auf einer Mehrzahl erster Parameter in einer ersten Gruppe der Mehrzahl von Gruppen, eines Quantisierungsgrenzwertes, welcher der ersten Gruppe entspricht.

3. Verfahren (200) nach Anspruch 2, wobei der Quantisierungsgrenzwert mindestens eines des Folgenden umfasst: einen Maximalwert oder einen Minimalwert, wobei
der Maximalwert ein Maximalwert von Werten der Mehrzahl erster Parameter ist oder der Maximalwert ein Maximalwert einer Mehrzahl absoluter Werte der Mehrzahl erster Parameter ist und der Minimalwert ein Minimalwert von Werten der Mehrzahl erster Parameter ist oder der Minimalwert ein Minimalwert der Mehrzahl absoluter Werte der Mehrzahl erster Parameter ist.

4. Verfahren (200) nach Anspruch 2 oder 3, wobei eine Quantisierungsgruppe, die der ersten Gruppe entspricht, den Quantisierungsgrenzwert und eine Mehrzahl von Quantisierungsparametern umfasst, die der Mehrzahl erster Parameter entspricht.

5. Verfahren (200) nach einem der Ansprüche 2 bis 4, ferner Folgendes umfassend:

   Empfangen, durch das erste Gerät (110), erster Angabeinformationen von dem zweiten Gerät (120), wobei die ersten Angabeinformationen angeben, ob der Quantisierungsgrenzwert basierend auf den absoluten Werten zu bestimmen ist; und
   das Bestimmen, durch das erste Gerät (110), eines Quantisierungsgrenzwertes, welcher der ersten Gruppe entspricht, Folgendes umfasst: Bestimmen, durch das erste Gerät, des Quantisierungsgrenzwertes basierend auf den ersten Angabeinformationen.

6. Verfahren (200) nach einem der Ansprüche 2 bis 4, ferner Folgendes umfassend:
Senden, durch das erste Gerät (110), zweiter Angabeinformationen an das zweite Gerät (120), wobei die zweiten Angabeinformationen angeben, ob der Quantisierungsgrenzwert basierend auf den absoluten Werten bestimmt ist.

7. Verfahren (200) nach einem der Ansprüche 1 bis 6, wobei jede Gruppe die gleiche Quantisierungsbitquantität aufweist.

8. Verfahren (200) nach einem der Ansprüche 1 bis 6, wobei die Mehrzahl von Gruppen die erste Gruppe und eine zweite Gruppe umfasst und eine Quantisierungsbitquantität, die der ersten Gruppe entspricht, nicht gleich einer Quantisierungsbitquantität ist, die der zweiten Gruppe entspricht.

9. Verfahren (200) nach Anspruch 8, wobei das Verfahren ferner Folgendes umfasst:
Bestimmen, durch das erste Gerät (110), einer Mehrzahl von Quantisierungsbitquantitäten, die der Mehrzahl von Gruppen entspricht.

10. Verfahren (200) nach Anspruch 9, wobei das Bestimmen, durch das erste Gerät (110), einer Mehrzahl von Quantisierungsbitquantitäten, die der Mehrzahl von Gruppen entspricht, Folgendes umfasst:
Bestimmen, durch das erste Gerät basierend auf einer Konfiguration für Quantisierungsbitquantitäten von dem zweiten Gerät (120), der Mehrzahl von Quantisierungsbitquantitäten, die der Mehrzahl von Gruppen entspricht, wobei die Konfiguration für Quantisierungsbitquantitäten einen Quantisierungsschwellenwert und die entsprechenden Quantisierungsbitquantitäten umfasst.

11. Verfahren (200) nach Anspruch 10, ferner Folgendes umfassend:
Empfangen, durch das erste Gerät (110), der Konfiguration für Quantisierungsbitquantitäten von dem zweiten Gerät (120).

12. Verfahren (200) nach einem der Ansprüche 9 bis 11, ferner Folgendes umfassend:
Senden, durch das erste Gerät (110), dritter Angabeinformationen an das zweite Gerät (120), wobei die dritten Angabeinformationen die Mehrzahl von Quantisierungsbitquantitäten angeben.

13. Verfahren (200) nach einem der Ansprüche 1 bis 8, wobei die Quantisierungsbitquantität durch das zweite Gerät (120) bestimmt wird und das Verfahren ferner Folgendes umfasst:
Empfangen, durch das erste Gerät (110), vierter Angabeinformationen von dem zweiten Gerät, wobei die vierten Angabeinformationen die Quantisierungsbitquantität angeben, die jeder der Mehrzahl von Gruppen entspricht.

**14.** Verfahren (200) nach einem der Ansprüche 1 bis 11, wobei das Aufteilen (210), durch ein erstes Gerät (110), von Parametern eines verteilten Trainingsmodells in eine Mehrzahl von Gruppen Folgendes umfasst:
Aufteilen, durch das erste Gerät. der Parameter des verteilten Trainingsmodells in die Mehrzahl von Gruppen in einer Art und Weise der Modellparameteraufteilung.

**15.** Verfahren (200) nach Anspruch 14, ferner Folgendes umfassend:

Bestimmen, durch das erste Gerät (110), der Art und Weise der Modellparameteraufteilung basierend auf Größen von Werten der Parameter des verteilten Trainingsmodells; und
Senden, durch das erste Gerät, fünfter Angabeinformationen an das zweite Gerät (120), wobei die fünften Angabeinformationen die Art und Weise der Modellparameteraufteilung angeben.

**Revendications**

**1.** Procédé de traitement de données (200) pour un processus d'apprentissage distribué dans lequel :

un deuxième dispositif (120) envoie un paramètre de modèle initial d'un modèle d'apprentissage distribué à une première pluralité de premiers dispositifs (110) ;
chaque premier dispositif de la première pluralité de premiers dispositifs effectue un apprentissage sur la base d'un ensemble de données local et du paramètre de modèle initial afin d'obtenir un paramètre traité, compresse le paramètre traité obtenu et envoie le paramètre compressé au deuxième dispositif ;
le deuxième dispositif décompresse le paramètre traité provenant de chacun des premiers dispositifs de la première pluralité de premiers dispositifs, obtient un paramètre de modèle mis à jour par agrégation et envoie le paramètre de modèle mis à jour à une deuxième pluralité de premiers dispositifs ; et
chaque premier dispositif de la deuxième pluralité de premiers dispositifs effectue un apprentissage sur la base d'un ensemble de données local et du paramètre de modèle mis à jour afin d'obtenir un paramètre retraité, compresse le paramètre retraité obtenu et envoie le paramètre retraité compressé au deuxième dispositif,
le procédé comprenant:

diviser (210), par un premier dispositif, des paramètres du modèle d'apprentissage distribué en une pluralité de groupes, où des intervalles numériques d'au moins deux de la pluralité de groupes sont différents ;
déterminer (220), par le premier dispositif sur la base d'une quantité de bits de quantification correspondant à chacun de la pluralité de groupes, une pluralité de groupes de quantification correspondant à la pluralité de groupes, où la quantité de bits de quantification est déterminée sur la base d'au moins l'un des éléments suivants :

une quantité de ressources de transmission entre le premier dispositif et le deuxième dispositif, une valeur de fonction de perte, ou une plage de valeurs d'un paramètre de chaque groupe ; et
envoyer (230), par le premier dispositif, la pluralité de groupes de quantification au deuxième dispositif.

**2.** Procédé (200) selon la revendication 1, comprenant en outre : déterminer, par le premier dispositif (110), sur la base d'une pluralité de premiers paramètres dans un premier groupe de la pluralité de groupes, une valeur limite de quantification correspondant au premier groupe.

**3.** Procédé (200) selon la revendication 2, dans lequel la valeur limite de quantification comprend au moins l'un des éléments suivants : une valeur maximale ou une valeur minimale, où
la valeur maximale est une valeur maximale des valeurs de la pluralité de premiers paramètres, ou la valeur maximale est une valeur maximale d'une pluralité de valeurs absolues de la pluralité de premiers paramètres, et la valeur minimale est une valeur minimale des valeurs de la pluralité de premiers paramètres, ou la valeur minimale est une valeur minimale de la pluralité de valeurs absolues de la pluralité de premiers paramètres.

**4.** Procédé (200) selon la revendication 2 ou 3, dans lequel un groupe de quantification correspondant au premier groupe comprend la valeur limite de quantification et une pluralité de paramètres de quantification correspondant à la pluralité de premiers paramètres.

**5.** Procédé (200) selon l'une quelconque des revendications 2 à 4, comprenant en outre :

recevoir, par le premier dispositif (110), une première information d'indication provenant du deuxième dispositif (120), où la première information d'indication indique s'il faut déterminer la valeur limite de quantification sur la base des valeurs absolues ; et

la détermination, par le premier dispositif (110), d'une valeur limite de quantification correspondant au premier groupe, comprend de déterminer, par le premier dispositif, la valeur limite de quantification sur la base des premières informations d'indication.

6. Procédé (200) selon l'une quelconque des revendications 2 à 4, comprenant en outre : envoyer, par le premier dispositif (110), une deuxième information d'indication au deuxième dispositif (120), où la deuxième information d'indication indique si la valeur limite de quantification est déterminée sur la base des valeurs absolues.

7. Procédé (200) selon l'une quelconque des revendications 1 à 6, dans lequel chaque groupe a une quantité de bits de quantification égale.

8. Procédé (200) selon l'une quelconque des revendications 1 à 6, dans lequel la pluralité de groupes comprend le premier groupe et un deuxième groupe, et une quantité de bits de quantification correspondant au premier groupe n'est pas égale à une quantité de bits de quantification correspondant au deuxième groupe.

9. Procédé (200) selon la revendication 8, dans lequel le procédé comprend en outre :
déterminer, par le premier dispositif (110), une pluralité de quantités de bits de quantification correspondant à la pluralité de groupes.

10. Procédé (200) selon la revendication 9, dans lequel la détermination, par le premier dispositif (110), d'une pluralité de quantités de bits de quantification correspondant à la pluralité de groupes comprend l'étape suivante :
déterminer, par le premier dispositif sur la base d'une configuration des quantités de bits de quantification provenant du deuxième dispositif (120), la pluralité de quantités de bits de quantification correspondant à la pluralité de groupes, où la configuration des quantités de bits de quantification comprend un seuil de quantification et les quantités de bits de quantification correspondantes.

11. Procédé (200) selon la revendication 10, comprenant en outre :
recevoir, par le premier dispositif (110), la configuration des quantités de bits de quantification en provenance du deuxième dispositif (120).

12. Procédé (200) selon l'une quelconque des revendications 9 à 11, comprenant en outre l'étape suivante :
envoyer, par le premier dispositif (110), une troisième information d'indication au deuxième dispositif (120), où la troisième information d'indication indique la pluralité de quantités de bits de quantification.

13. Procédé (200) selon l'une quelconque des revendications 1 à 8, dans lequel la quantité de bits de quantification est déterminée par le deuxième dispositif (120), et le procédé comprend en outre :
recevoir, par le premier dispositif (110), une quatrième information d'indication en provenance du deuxième dispositif, où la quatrième information d'indication indique la quantité de bits de quantification correspondant à chacun de la pluralité de groupes.

14. Procédé (200) selon l'une quelconque des revendications 1 à 11, dans lequel la division (210), par un premier dispositif (110), des paramètres d'un modèle d'apprentissage distribué en une pluralité de groupes comprend :
diviser, par le premier dispositif, les paramètres du modèle d'apprentissage distribué en la pluralité de groupes selon un mode de division des paramètres du modèle.

15. Procédé (200) selon la revendication 14, comprenant en outre :

déterminer, par le premier dispositif (110), le mode de division des paramètres du modèle sur la base des grandeurs des valeurs des paramètres du modèle d'apprentissage distribué ; et
envoyer, par le premier dispositif, une cinquième information d'indication au deuxième dispositif (120), où la cinquième information d'indication indique le mode de division des paramètres du modèle.

100

120

Second
device

First device          First device          First device

110-1          110-2          110-N

FIG. 1

200

110

First device

120

Second device

210
Parameter division

220
Determine a plurality of
quantization groups

The plurality of quantization groups
230

240
Determine a
plurality of groups

250
Determine a
model parameter

FIG. 2

300

| Convolutional layer 1 | Pooling layer 1 | BN layer 1 |
| --- | --- | --- |
| Weight parameter | | |
| Offset parameter | | |

...

| Convolutional layer n | Pooling layer n | BN layer n |
| --- | --- | --- |
| Weight parameter | | |
| Offset parameter | | |

| FC layer 1 |
| --- |
| Offset parameter |

...

| FC layer m |
| --- |
| Offset parameter |

Group

310

Group

320

Group

330

FIG. 3

FIG. 4

FIG. 5

EP 4 465 213 B1

600

110

First device

120

Second device

610
Determine a compression
configuration message

Compression configuration message
620

To-be-trained parameter
630

640
Obtain a parameter of a
distributed training model

650
Determine a parameter division
manner, a quantization manner,
and a quantization bit quantity

660
Determine a plurality
of quantization groups

670
Entropy encoding

The plurality of quantization groups
680

Quantization bit feedback message
6822

Quantization bit response message
6824

Indication information of the
quantization bit quantity
6842

Quantization indication message
6862

Entropy encoding indication information
6882

690
Dequantization

FIG. 6

700

722
Quantization manner

732
Quantization bit quantity

710
First indication information

720
Second indication information

730
Third indication information

740
Entropy encoding indication information

724
Quantization manner configuration

734

7342
Quantization granularity

7344
Quantization threshold and quantization bit quantity list

FIG. 7

800

810
Quantization boundary value data field

820
Quantization parameter data field

FIG. 8

FIG. 9

1000

1032

Quantization bit
quantity

1010

First indication
information

1020

Second indication
information

1030

Third indication
information

1040

Entropy encoding
indication
information

1034

Quantization
granularity

1036

Quantization list

FIG. 10

1100

1130

Index list

1110

Quantization
boundary value data
field

1120

Quantization
parameter data field

FIG. 11

1200 ⟍

```
┌ ─ ─ ─ ─ ─ ─ ─ ─ ─ ─ ─ ─ ─ ─ ─ ┐
│                           ⟋ 1210  │
│   ┌─────────────────────┐         │
│   │   Division module   │         │
│   └─────────────────────┘         │
│                           ⟋ 1220  │
│   ┌─────────────────────┐         │
│   │ Determining module  │         │
│   └─────────────────────┘         │
│                           ⟋ 1230  │
│   ┌─────────────────────┐         │
│   │   Sending module    │         │
│   └─────────────────────┘         │
│                           ⟋ 1240  │
│   ┌ ─ ─ ─ ─ ─ ─ ─ ─ ─ ─ ┐        │
│   │   Receiving module   │        │
│   └ ─ ─ ─ ─ ─ ─ ─ ─ ─ ─ ┘        │
│                           ⟋ 1250  │
│   ┌ ─ ─ ─ ─ ─ ─ ─ ─ ─ ─ ┐        │
│   │ Entropy encoding module │     │
│   └ ─ ─ ─ ─ ─ ─ ─ ─ ─ ─ ┘        │
└ ─ ─ ─ ─ ─ ─ ─ ─ ─ ─ ─ ─ ─ ─ ─ ┘
```

FIG. 12

1300 ⟍

```
┌ ─ ─ ─ ─ ─ ─ ─ ─ ─ ─ ─ ─ ─ ─ ─ ┐
│                           ⟋ 1310  │
│   ┌─────────────────────┐         │
│   │  Receiving module   │         │
│   └─────────────────────┘         │
│                           ⟋ 1320  │
│   ┌─────────────────────┐         │
│   │First determining module│      │
│   └─────────────────────┘         │
│                           ⟋ 1330  │
│   ┌─────────────────────┐         │
│   │Second determining module│     │
│   └─────────────────────┘         │
│                           ⟋ 1340  │
│   ┌ ─ ─ ─ ─ ─ ─ ─ ─ ─ ─ ┐        │
│   │   Sending module     │        │
│   └ ─ ─ ─ ─ ─ ─ ─ ─ ─ ─ ┘        │
└ ─ ─ ─ ─ ─ ─ ─ ─ ─ ─ ─ ─ ─ ─ ─ ┘
```

FIG. 13

1400

Communication module — 1440

Processor — 1410

Memory — 1420

RAM — 1422

ROM — 1424

1430

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROBERT HÖNIG**. DAdaQuant:Doubly-adaptive quantization for communication-efficient Federated Learning. *ArXiv.org*, 31 October 2021